# EUROPEAN PATENT APPLICATION

(11) **EP 4 293 535 A1**
(43) Date of publication of application: **20.12.2023**
(21) Application number: 22804019.2
(22) Date of filing: 19.05.2022
(51) Int. Cl.: G06F 16/332

(54) **INFORMATION RECOMMENDATION METHOD AND RELATED DEVICE**

(30) Priority: 20.05.2021 CN 202110553976
(71) Applicant: Huawei Technologies Co., Ltd., Shenzhen, Guangdong 518129 (CN)
(72) Inventor: QI, Qi, Shenzhen, Guangdong 518129 (CN); HUANG, Lei, Shenzhen, Guangdong 518129 (CN); JIN, Yudian, Shenzhen, Guangdong 518129 (CN)
(74) Representative: Pfenning, Meinig & Partner mbB
(86) International application number: PCT/CN2022/093741
(87) International publication number: WO 2022/242699

(57) **Abstract**

An information recommendation method is provided, and may be applied to a vehicle-mounted terminal. The method includes: obtaining at least one behavioral intention of a user, where the at least one behavioral intention is determined based on historical interaction data between a mobile terminal and the user (301); presenting recommendation information based on the at least one behavioral intention, where the recommendation information indicates the user to choose from the at least one behavioral intention (302); and triggering a target function when it is detected that the user selects a target intention in the at least one behavioral intention based on the recommendation information, where the target function is used to implement the target intention (303). According to the method, interaction costs between the user and the vehicle-mounted terminal can be reduced.

## Description

This application claims priority to Chinese Patent Application No. 202110553976.1, filed with the China National Intellectual Property Administration on May 20, 2021 and entitled "INFORMATION RECOMMENDATION METHOD AND RELATED DEVICE", which is incorporated herein by reference in its entirety.

### TECHNICAL FIELD

This application relates to the field of intelligent driving, and in particular, to an information recommendation method and a related device.

### BACKGROUND

Emergence of intelligent devices brings great convenience to people's life. Product types of the intelligent device become richer as application scenarios are richer. For example, there is a mobile terminaland a vehicle-mounted terminal deployed on a vehicle. Because the mobile terminal is a terminal that may be carried with a user, the user may interact with the mobile terminal anytime anywhere, for example, perform an information search with an intelligent assistant on the mobile terminal.

In a scenario, the user searches for information on the mobile terminal for one time before the user enters the vehicle. If the user further needs to repeatedly search for same content on the vehicle-mounted terminal after the user enters the vehicle, operation costs of the user are increased. For example, before the user enters the vehicle, the user first searches for a destination to query navigation-related information. After the user enters the vehicle, the user further needs to perform a same search operation on the vehicle-mounted terminal to perform navigation. In this way, one time of repeated interaction is performed for same content, and operation costs of the user are increased. In addition, an interaction cost problem is more prominent on a device with low usability, for example, a vehicle-mounted terminal.

### SUMMARY

According to a first aspect, an embodiment of this application provides an information recommendation method, applied to a vehicle-mounted terminal. The vehicle-mounted terminal is a control terminal fastened in a vehicle compartment, and the vehicle-mounted terminal may control driving of a vehicle and a functional implementation within a cockpit.

The method includes:
At least one behavioral intention of a user is obtained. The at least one behavioral intention is determined based on historical interaction data between a mobile terminal and the user. For example, behavioral intention recognition may be performed on the historical interaction data based on a semantic recognition algorithm, a neural network model, or the like, and the at least one behavioral intention of the user is further obtained.

The historical interaction data is historical interaction data between the user and an application on the mobile terminal. A behavioral intention of the user is usually included in interaction between the user and an application of this type. The application may be a life service-type application, for example, map software, application software with a function of querying a merchant and a merchant address, or a voice assistant (or referred to as an intelligent assistant).

The historical interaction data may be an interactive statement such as a query-type interactive statement or a request-type interactive statement that is entered by the user on a mobile terminal by using a text or a voice, or an operation record generated by operating some functions in an application (for example, opening links of some merchants).

A user intention obtained by the vehicle-mounted terminal from the historical interaction data needs to be a recent possible behavioral intention of the user, to ensure accuracy of the behavioral intention that is of the user and that is obtained by the vehicle-mounted terminal.

Recommendation information is presented based on the at least one behavioral intention. The recommendation information indicates the user to choose from the at least one behavioral intention.

The recommendation information includes an inferred current possible behavioral intention of the user, and the recommendation information may indicate the user to choose from the at least one behavioral intention. Further, the user may select a current real behavioral intention (which may be referred to as a target intention) based on the recommendation information, and the vehicle-mounted terminal may automatically trigger a corresponding function to implement the target intention selected by the user.

The user does not need to enter the current real behavioral intention on the vehicle-mounted terminal to trigger the corresponding function, but only needs to select the behavioral intention based on the recommendation information (for example, taps an option or answers a question), to greatly reduce interaction costs between the user and the vehicle-mounted terminal.

A target function is triggered when it is detected that the user selects a target intention in the at least one behavioral intention based on the recommendation information. The target function is used to implement the target intention.

The user may select, from the recommendation information, a behavioral intention that can accurately represent a will of the user, and choose whether to execute a behavior corresponding to the behavioral intention Further, the vehicle-mounted terminal may trigger execution of the target function, to implement the behavioral intention selected by the user.

In this application, a data connection is established between different devices (the mobile terminal and a vehicle-mounted device), so that an interaction record is shared between the different devices. The vehicle-mounted device understands the behavioral intention of the user based on the historical interaction data received from the mobile terminal, and then actively interacts with the user based on the understood behavioral intention. The user does not need to enter the current real behavioral intention on the vehicle-mounted terminal to trigger the corresponding function, but the vehicle-mounted terminal actively seeks to interact with the user based on the behavioral intention, to avoid entering a same question on different terminals for two times. In addition, the behavioral intention is guessed based on an interaction record of the user on the mobile terminal, and represents the current real intention of the user in a high probability. The user only needs to respond to interaction of the vehicle-mounted terminal, and determines/selects a behavioral intention presented by the vehicle-mounted terminal (for example, taps an option or answers a question), to greatly reduce user-side interaction costs.

In a possible implementation, the historical interaction data is interaction data between the mobile terminal and the user that is generated within a preset time period (for example, the preset time period may be 1 second, 30 seconds, 1 minute, 10 minutes, half an hour, or one hour) before a current moment; or the historical interaction data is interaction data between the mobile terminal and the user that is generated within a preset quantity of interaction times (for example, the preset quantity of interaction times may be one time, three times, or ten times) before a current moment.

A user intention obtained by the vehicle-mounted terminal from the historical interaction data needs to be a recent possible behavioral intention of the user, to ensure accuracy of the behavioral intention that is of the user and that is obtained by the vehicle-mounted terminal.

In a possible implementation, the historical interaction data is a statement entered by the user in a target application that runs on the mobile terminal. For example, the historical interaction data may be an interactive statement such as a query-type interactive statement entered by the user on the mobile terminal by using a text or a voice. Alternatively, the historical interaction data is data generated when the user interacts with a target application that runs on the mobile terminal. For example, the historical interaction data may be an operation record generated when the user operates an application on the mobile terminal, or status data related to the mobile terminal.

In a possible implementation, semantics of the historical interaction data includes the at least one behavioral intention of the user.

In a possible implementation, that recommendation information is presented includes: displaying at least one function trigger option. Each function trigger option corresponds to one behavioral intention, and each function trigger option is used to trigger a function of implementing a corresponding behavioral intention. For example, the recommendation information may be presented by using a function card in a form of a text or picture displayed on a display.

In a possible implementation, the historical interaction data is the statement entered by the user in the target application that runs on the mobile terminal, and the method further includes: performing word segmentation processing on the statement, to obtain at least one word segment, where each word segment corresponds to one behavioral intention; and displaying the at least one word segment, and displaying a corresponding function trigger option near a display location of each of the at least one word segment. A presentation sequence of a split word is the same as a presentation sequence in an original statement. If an originally entered statement is a word that is said by the user, a word sequence is not changed for the presentation sequence of the split word, to help wake up a memory of the user. In addition, a complete sentence facilitates understanding of the user.

In a possible implementation, that recommendation information is presented includes: displaying and/or playing a target statement. The target statement is used to prompt the user whether to enable a function of implementing the at least one behavioral intention.

In a possible implementation, the at least one behavioral intention includes a navigation intention or an intention associated with function control within a cockpit.

In a possible implementation, the intention associated with function control within the cockpit includes at least one of the following: music playing, video playing, a voice call, a memo content record, an event reminder, air conditioner control, seat adjustment, and sunroof control.

In a possible implementation, before the at least one behavioral intention of the user is obtained, the method further includes: detecting that a communication connection is established with the mobile terminal; or detecting that a distance from the mobile terminal is less than a threshold; or running the target application, and logging in to an account to which the mobile terminal belongs in the target application.

In a possible implementation, the vehicle-mounted terminal is a control terminal fastened in a vehicle compartment, and the mobile terminal is a removable portable terminal.

In a possible implementation, that at least one behavioral intention of a user is obtained includes: receiving the at least one behavioral intention sent by a server or the mobile terminal; or receiving the historical interaction data sent by a server or the mobile terminal, and determining the at least one behavioral intention based on the historical interaction data.

In a possible implementation, the mobile terminal may determine the at least one behavioral intention of the user based on the historical interaction data between the mobile terminal and the user, and then transfer the at least one behavioral intention to the vehicle-mounted terminal; and further, the vehicle-mounted terminal may obtain the at least one behavioral intention of the user (or the mobile terminal transfers the at least one behavioral intention to a cloud-side server, and the cloud-side server forwards the at least one behavioral intention to the vehicle-mounted terminal).

In a possible implementation, the mobile terminal may transfer the historical interaction data between the mobile terminal and the user to the vehicle-mounted terminal, and the vehicle-mounted terminal determines the at least one behavioral intention of the user based on the historical interaction data between the mobile terminal and the user (or the mobile termianl transfers the historical interaction data between the mobile terminal and the user to a cloud-side server, and the cloud-side server forwards the historical interaction data to the vehicle-mounted terminal).

In a possible implementation, the mobile terminal may transfer the historical interaction data between the mobile terminal and the user to a cloud-side server, the cloud-side server determines the at least one behavioral intention of the user based on the historical interaction data between the mobile terminal and the user, the cloud-side server transfers the at least one behavioral intention of the user to the vehicle-mounted terminal, and further, the vehicle-mounted terminal may obtain the at least one behavioral intention of the user.

According to a second aspect, this application provides an information recommendation apparatus, applied to a vehicle-mounted terminal. The apparatus includes:
an obtaining module, configured to obtain at least one behavioral intention of a user, where the at least one behavioral intention is determined based on historical interaction data between a mobile terminal and the user;
a recommendation module, configured to present recommendation information based on the at least one behavioral intention, where the recommendation information indicates the user to choose from the at least one behavioral intention; and
a function triggering module, configured to trigger a target function when it is detected that the user selects a target intention in the at least one behavioral intention based on the recommendation information, where the target function is used to implement the target intention.

In the foregoing manner, behavioral intention information carried in the historical interaction data is transferred by a mobile terminal to the vehicle-mounted terminal, to reduce repeated interaction between the user and the vehicle-mounted terminal. In addition, the vehicle-mounted terminal can also play a function of performing reminding again, to prevent the user from forgetting a thing that the user wants to do. In addition, the user does not need to enter a current real behavioral intention on the vehicle-mounted terminal to trigger a corresponding function, but only needs to select the behavioral intention based on the recommendation information (for example, taps an option or answers a question), to greatly reduce interaction costs between the user and the vehicle-mounted terminal.

In a possible implementation, the historical interaction data is interaction data between the mobile terminal and the user that is generated within a preset time period before a current moment; or
the historical interaction data is interaction data between the mobile terminal and the user that is generated within a preset quantity of interaction times before a current moment.

In a possible implementation, the historical interaction data is a statement entered by the user in a target application that runs on the mobile terminal; or
the historical interaction data is data generated when the user interacts with a target application that runs on the mobile terminal.

In a possible implementation, semantics of the historical interaction data includes the at least one behavioral intention of the user.

In a possible implementation, the recommendation module is configured to display at least one function trigger option. Each function trigger option corresponds to one behavioral intention, and each function trigger option is used to trigger a function of implementing a corresponding behavioral intention.

In a possible implementation, the historical interaction data is the statement entered by the user in the target application that runs on the mobile terminal, and the apparatus further includes:
a word segmentation processing module, configured to perform word segmentation processing on the statement, to obtain at least one word segment, where each word segment corresponds to one behavioral intention, where
the recommendation module is configured to: display the at least one word segment, and display a corresponding function trigger option near a display location of each of the at least one word segment.

In a possible implementation, the recommendation module is configured to display and/or play a target statement. The target statement is used to prompt the user whether to enable a function of implementing the at least one behavioral intention.

In a possible implementation, the at least one behavioral intention includes a navigation intention or an intention associated with function control within a cockpit.

In a possible implementation, the intention associated with function control within the cockpit includes at least one of the following:
music playing, video playing, a voice call, a memo content record, an event reminder, air conditioner control, seat adjustment, and sunroof control.

In a possible implementation, the apparatus further includes a detection module, configured to:
before the at least one behavioral intention of the user is obtained, detect that a communication connection is established with the mobile terminal; or detect that a distance from the mobile terminal is less than a threshold; or run the target application, and log in to an account to which the mobile terminal belongs in the target application.

In a possible implementation, the vehicle-mounted terminal is a control terminal fastened in a vehicle compartment, and the mobile terminal is a removable portable terminal.

In a possible implementation, the obtaining module is specifically configured to:
receive the at least one behavioral intention sent by a server or the mobile terminal; or
receive the historical interaction data sent by a server or the mobile terminal, and determine the at least one behavioral intention based on the historical interaction data.

According to a third aspect, this application provides a vehicle-mounted terminal, including a processor, a memory, and a bus. The processor and the memory are connected through the bus.

The memory is configured to store a computer program or instructions.

The processor is configured to invoke or execute the program or instructions stored in the memory, to implement the steps in any one of the first aspect and the possible implementations of the first aspect.

According to a fourth aspect, this application provides a computer storage medium, including computer instructions. When the computer instructions run on an electronic device or a server, the steps in any one of the first aspect and the possible implementations of the first aspect are performed.

According to a fifth aspect, this application provides a computer program product. When the computer program product runs on an electronic device or a server, the steps in any one of the first aspect and the possible implementations of the first aspect are performed.

According to a sixth aspect, this application provides a chip system. The chip system includes a processor, configured to support an execution device or a training device to implement a function in the foregoing aspects, for example, a function of sending or processing data or information in the foregoing methods. In a possible design, the chip system further includes a memory. The memory is configured to store program instructions and data that are necessary for the execution device or the training device. The chip system may include a chip, or may include a chip and another discrete component.

Embodiments of this application provide an information recommendation method, applied to a vehicle-mounted terminal. The method includes: obtaining the at least one behavioral intention of the user, where the at least one behavioral intention is determined based on the historical interaction data between the mobile terminal and the user; presenting the recommendation information based on the at least one behavioral intention, where the recommendation information indicates the user to choose from the at least one behavioral intention; and triggering the target function when it is detected that the user selects the target intention in the at least one behavioral intention based on the recommendation information, where the target function is used to implement the target intention. In the foregoing manner, a data connection is established between different devices (the mobile terminal and the vehicle-mounted device), so that an interaction record is shared between the different devices. The behavioral intention of the user is understood based on the historical interaction data, and then interaction with the user is actively performed based on the understood behavioral intention. The user does not need to enter the current real behavioral intention on the vehicle-mounted terminal to trigger the corresponding function, but the vehicle-mounted terminal actively seeks to interact with the user based on the behavioral intention, to avoid entering a same question on different terminals for two times. In addition, the behavioral intention is guessed based on the interaction record of the user on the mobile terminal, and represents the current real intention of the user in a high probability. The user only needs to respond to interaction of the vehicle-mounted terminal, and determines/selects the behavioral intention presented by the vehicle-mounted terminal (for example, taps an option or answers a question), to greatly reduce user-side interaction costs.

### BRIEF DESCRIPTION OF DRAWINGS

FIG. 1 is a schematic diagram of a structure of an application architecture according to an embodiment of this application;
FIG. 2a shows an architecture of a vehicle-mounted device according to an embodiment of this application;
FIG. 2b shows an architecture of a mobile terminal according to an embodiment of this application;
FIG. 2c shows a software architecture of a mobile terminal according to an embodiment of this application;
FIG. 3 shows an information recommendation method according to an embodiment of this application;
FIG. 4 shows user interaction according to an embodiment of this application;
FIG. 5 shows user interaction according to an embodiment of this application;
FIG. 6 shows user interaction according to an embodiment of this application;
FIG. 7 shows user interaction according to an embodiment of this application;
FIG. 8 shows user interaction according to an embodiment of this application;
FIG. 9 shows user interaction according to an embodiment of this application;
FIG. 10 shows user interaction according to an embodiment of this application;
FIG. 11 shows user interaction according to an embodiment of this application;
FIG. 12 shows user interaction according to an embodiment of this application;
FIG. 13 shows user interaction according to an embodiment of this application;
FIG. 14 shows user interaction according to an embodiment of this application;
FIG. 15 shows user interaction according to an embodiment of this application;
FIG. 16 shows an information recommendation method according to an embodiment of this application;
FIG. 17 shows an information recommendation apparatus according to an embodiment of this application; and
FIG. 18 shows a terminal device according to an embodiment of this application.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, but are not intended to limit the present invention.

The following describes embodiments of this application with reference to the accompanying drawings. It can be learned by a person of ordinary skill in the art that, with development of a technology and emergence of a new scenario, the technical solutions provided in embodiments of this application are also applicable to similar technical problems.

In the specification, claims, and the accompanying drawings of this application, the terms such as "first" and "second" are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have" and any other variants thereof mean to cover the non-exclusive inclusion, so that a process, method, system, product, or device that includes a series of units is not necessarily limited to those units, but may include other units not expressly listed or inherent to such a process, method, system, product, or device.

An application scenario in embodiments of this application is first described.

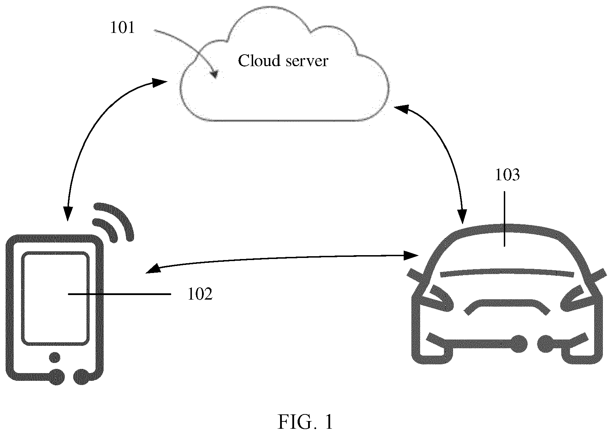

FIG. 1 shows a scenario to which embodiments of this application are applied. The system to which embodiments of this application are applied may include a vehicle-mounted terminal 103, a mobile terminal 102, and a cloud-side server 101. The cloud-side server is optional. The vehicle-mounted terminal 103 may be connected to the mobile terminal 102 through the cloud-side server 101, and the vehicle-mounted terminal 103 may be directly connected to the mobile terminal 102. For example, a direct connection manner may be but is not limited to Bluetooth, a wireless fidelity (wireless fidelity, Wi-Fi), and near field communication (near field communication, NFC).

The vehicle-mounted terminal 103 may be a control terminal fastened in a vehicle compartment. The vehicle-mounted terminal 103 may be provided with a plurality of functional modules. The vehicle-mounted terminal 103 can run an application such as an intelligent assistant, and the application can be connected to the cloud-side server 101, to implement data sharing with an application on the mobile terminal 102.

The mobile terminal 102 may be a removable portable terminal. In terms of implementing interaction functions such as text interaction and voice interaction, the mobile terminal 102 has a more convenient interaction manner than the vehicle-mounted terminal 103. Being more convenient can be understood as having higher usability. Specifically, a product may be easier to learn and use for a user. For example, an operating difficulty of using the vehicle-mounted terminal 103 by the user is greater than an operating difficulty of using the mobile terminal 102, and the vehicle-mounted terminal 103 has lower usability than the mobile terminal 102. The mobile terminal 102 is usually a device frequently used by a user, for example, an easy-to-use portable terminal such as a mobile phone or a portable computer. The mobile terminal 102 is installed with an application such as an intelligent assistant, and can interact with the user by using a voice, a text, or the like. The application supports storage of an interaction record.

The cloud-side server 101 may exchange information and data with the mobile terminal 102 and the vehicle-mounted terminal 103. As a transit station for exchanging information and data, the cloud-side server 101 implements data sharing between the mobile terminal 102 and the vehicle-mounted terminal 103.

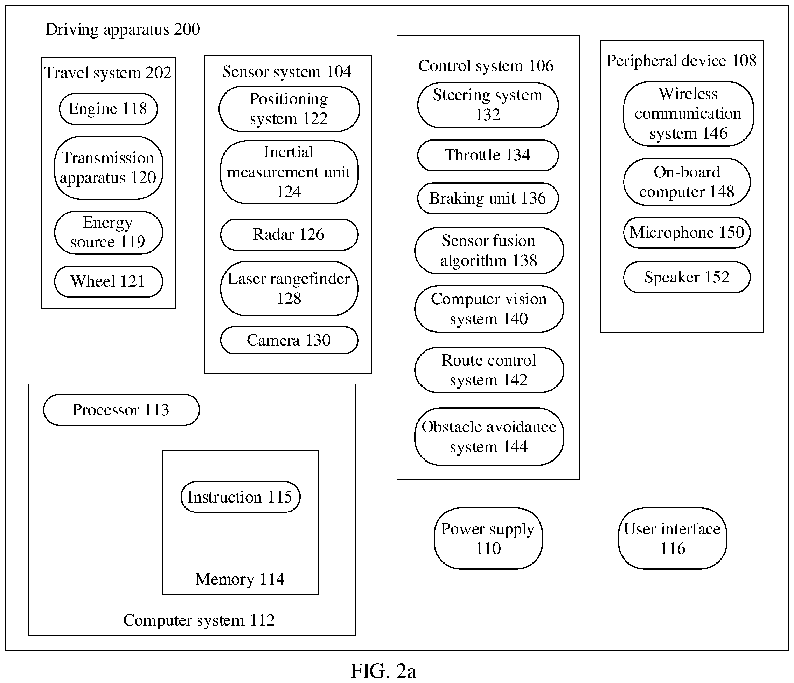

The following describes an architecture of a vehicle-mounted terminal in an embodiment of this application with reference to FIG. 2a.

In this embodiment of this application, a vehicle may include a driving apparatus 200 having a driving function, and the driving apparatus 200 may include a vehicle-mounted terminal.

FIG. 2a is a functional block diagram of a driving apparatus 200 having a driving function. In an embodiment, the driving apparatus 200 may include various subsystems such as a travel system 202, a sensor system 104, a control system 106, one or more peripheral devices 108, a power supply 110, a computer system 112, and a user interface 116. Optionally, the driving apparatus 200 may include more or fewer subsystems, and each subsystem may include a plurality of elements. In addition, all subsystems and elements of the driving apparatus 200 may be interconnected in a wired or wireless manner.

The vehicle-mounted terminal in this embodiment of this application may include some or all of the computer system 112, the user interface 116, and the peripheral device 108.

Some or all functions of the driving apparatus 200 are controlled by the computer system 112. The computer system 112 may include at least one processor 113, and the processor 113 executes instructions 115 stored in a non-transient computer-readable medium such as a memory 114. The computer system 112 may alternatively be a plurality of computing devices that control an individual component or a subsystem of the driving apparatus 200 in a distributed manner.

The processor 113 may be any conventional processor, for example, a commercially available central processing unit (central processing unit, CPU). Alternatively, the processor may be a dedicated device such as an application-specific integrated circuit (application-specific integrated circuit, ASIC) or another hardware-based processor. Although FIG. 2a functionally illustrates the processor, the memory, and other elements of computer system 112in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer 110. Therefore, a reference to the processor, the computer, or the memoryis understood as including a reference to a set of processors, computers, or memories that may or may not operate in parallel. Different from using a single processor to perform steps described herein, some components such as a steering component and a deceleration component each may include a respective processor. The processor performs only computation related to a component-specific function.

In various aspects described herein, the processor may be located away from the driving apparatus and communicate with the driving apparatus in a wireless manner. In another aspect, some of processes described herein are executed by a processor disposed in the driving apparatus, and the others are executed by a remote processor, including necessary steps for performing a single operation.

In some embodiments, the memory 114 may include the instructions 115 (for example, program logic), and the instructions 115 may be executed by the processor 113 to perform various functions of the driving apparatus 200, including those functions described above. The memory 114 may further include additional instructions, including instructions used to send data to, receive data from, interact with, and/or control one or more of the travel system 202, the sensor system 104, the control system 106, and the peripheral device 108.

In addition to the instructions 115, the memory 114 may further store data such as a road map, route information, a location, direction, and speed of the driving apparatus, data of another driving apparatus of this type, and other information. Such information may be used by the driving apparatus 200 and the computer system 112 when the driving apparatus 200 operates in an autonomous mode, a semi-autonomous mode, and/or a manual mode.

An information recommendation method provided in embodiments of this application may be software code stored in the memory 114. The processor 113 may obtain the software code from the memory, and execute the obtained software code to implement the information recommendation method provided in embodiments of this application.

Specifically, the processor 113 may obtain at least one behavioral intention of a user, generate recommendation information based on the at least one behavioral intention, and transfer the recommendation information to the peripheral device 108 through the user interface 116, and the peripheral device 108 presents the recommendation information.

In addition, the processor 113 may receive a user selection transferred from the peripheral device 108 through the user interface 116, and trigger, based on the user selection, another system to implement a corresponding function.

The user interface 116 is configured to provide information for or receive information from a user of the driving apparatus 200. Optionally, the user interface 116 may include one or more input/output devices within a set of peripheral devices 108 such as a wireless communication system 146, an on-board computer 148, a microphone 150, and a speaker 152.

The driving apparatus 200 interacts with an external sensor, another driving apparatus, another computer system, or the user through the peripheral device 108. The peripheral device 108 may include the wireless communication system 146, the on-board computer 148, the microphone 150, and/or the speaker 152.

In some embodiments, the peripheral device 108 provides a means by which the user of the driving apparatus 200 interacts with the user interface 116. For example, the on-board computer 148 may provide information for the user of the driving apparatus 200. The user interface 116 may further operate the on-board computer 148 to receive an input from the user. The on-board computer 148 may be operated through a touchscreen. In another case, the peripheral device 108 may provide a means by which the driving apparatus 200 communicates with another device located in the vehicle. For example, the microphone 150 may receive audio (for example, a voice command or another audio input) from the user of the driving apparatus 200. Similarly, the speaker 152 may output audio to the user of the driving apparatus 200.

In this embodiment of this application, the recommendation information generated by the vehicle-mounted terminal based on the behavioral intention may be presented to the user through the peripheral device 108. For example, the recommendation information may be presented on a display of the on-board computer 148 in a form of a text, an image, or the like, or the recommendation information may be presented in an audio form through the speaker 152.

The peripheral device 108 may transfer, to the processor 113, a result of selecting a target intention from the presented recommendation information by the user. For example, when the recommendation information of the vehicle-mounted terminal is presented on a display of the on-board computer 148 by using a text or a function card, the user may touch the display of the on-board computer 148 to select the target intention, and the target intention is a real behavioral intention of a current user. For example, the user may select the target intention by using a voice. When the recommendation information of the vehicle-mounted terminal is presented as audio through the speaker 152, the user may select the target intention by using a voice, and the target intention is the real behavioral intention of the current user.

In this embodiment of this application, the computer system 112 may trigger, based on the selection that is of the user for the target intention and that is received from the user interface 116, a corresponding subsystem to implement a target function. The target function is used to implement the target intention.

For example, when the target intention is a navigation intention, the computer system 112 may trigger the travel system 202, the sensor system 104, and the control system 106 to cooperate to implement the navigation intention.

For example, when the target intention is music playing, the computer system 112 may trigger the peripheral device 108 to implement music playing.

For example, when the target intention is video playing, the peripheral device 108 may be triggered to implement video playing.

For example, when the target intention is a voice call, the peripheral device 108 may be triggered to implement the voice call.

For example, when the target intention is a memo content record, the peripheral device 108 may be triggered to implement the memo content record.

For example, when the target intention is an event reminder, the peripheral device 108 may be triggered to implement the event reminder, or the like.

For example, the computer system 112 may use an input from the control system 106 to control a steering system 132 to avoid an obstacle detected by the sensor system 104 and an obstacle avoidance system 144. In some embodiments, the computer system 112 is operable to provide control over many aspects of the driving apparatus 200 and the subsystems of the driving apparatus 200.

The travel system 202 may include a component that provides power for the driving apparatus 200 to move. In an embodiment, the travel system 202 may include an engine 118, an energy source 119, a transmission apparatus 120, and a wheel/tire 121. The engine 118 may be an internal combustion engine, an electric motor, an air compression engine, or another type of engine combination, for example, a hybrid engine including a gas-oil engine and an electric motor, or a hybrid engine including an internal combustion engine and an air compression engine. The engine 118 converts the energy source 119 into mechanical energy.

Examples of the energy source 119 include gasoline, diesel, another oil-based fuel, propane, another compressed gas-based fuel, ethanol, a solar panel, a battery, and another power source. The energy source 119 may further provide energy for another system of the driving apparatus 200.

The transmission apparatus 120 may transfer the mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about an ambient environment of the driving apparatus 200. For example, the sensor system 104 may include a positioning system 122 (the positioning system may be a global positioning system (global positioning system, GPS), or may be a BeiDou system or another positioning system), an inertial measurement unit (inertial measurement unit, IMU) 124, a radar 126, a laser rangefinder 128, and a camera 130. The sensor system 104 may further include a sensor that monitors an internal system of the driving apparatus 200 (for example, an in-vehicle air quality monitor, a fuel gauge, or an oil temperature gauge). Sensor data from one or more of these sensors may be used to detect an object and corresponding features (a location, a shape, a direction, a speed, and the like) of the object. Detection and recognition are key functions for implementing a secure operation by the driving apparatus 200.

The radar 126 may sense an object in the ambient environment of the driving apparatus 200 by using a radio signal. In some embodiments, in addition to sensing an object, the radar 126 may be further configured to sense a speed and/or a forward direction of the object.

The radar 126 may include an electromagnetic wave sending portion and receiving portion.

The laser rangefinder 128 may use a laser to sense an object in an environment in which the driving apparatus 200 is located. In some embodiments, the laser rangefinder 128 may include one or more laser sources, a laser scanner, one or more detectors, and another system component.

The camera 130 may be configured to capture a plurality of images of the ambient environment of the driving apparatus 200. The camera 130 may be a static camera or a video camera.

The control system 106 controls operations of the driving apparatus 200 and components of the driving apparatus 200. The control system 106 may include various components, including the steering system 132, a throttle 134, a braking unit 136, a sensor fusion algorithm 138, a computer vision system 140, a route control system 142, and the obstacle avoidance system 144.

The steering system 132 may operate to adjust a forward direction of the driving apparatus 200. For example, in an embodiment, the steering system 132 may be a steering wheel system.

The throttle 134 is configured to control an operating speed of the engine 118 and further control a speed of the driving apparatus 200.

The braking unit 136 is configured to control the driving apparatus 200 to decelerate. The braking unit 136 may use friction to slow down the wheel 121. In another embodiment, the braking unit 136 may convert kinetic energy of the wheel 121 into a current. The braking unit 136 may alternatively use another form to reduce a rotational speed of the wheel 121, to control the speed of the driving apparatus 200.

The computer vision system 140 may operate to process and analyze an image captured by the camera 130, to recognize an object and/or a feature in the ambient environment of the driving apparatus 200. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to draw a map for an environment, track an object, estimate a speed of the object, and the like.

The route control system 142 is configured to determine a driving route of the driving apparatus 200. In some embodiments, the route control system 142 may determine the driving route for the driving apparatus 200 with reference to data from the sensor fusion algorithm 13 8, the positioning system 122, and one or more predetermined maps.

The obstacle avoidance system 144 is configured to recognize, evaluate, and avoid or bypass a potential obstacle in an environment of the driving apparatus 200.

The wireless communication system 146 may communicate with one or more devices directly or through a communication network in a wireless manner. For example, the wireless communication system 146 may use 3G cellular communication such as code division multiple access (code division multiple access, CDMA), EVDO, or global system for mobile communications (global system for mobile communications, GSM)/general packet radio service (general packet radio service, GPRS), or 4G cellular communication such as long term evolution (long term evolution, LTE), or 5G cellular communication. The wireless communication system 146 may communicate with a wireless local area network (wireless local area network, WLAN) through Wi-Fi. In some embodiments, the wireless communication system 146 may directly communicate with a device by using an infrared link, Bluetooth, or ZigBee. For other wireless protocols such as various driving apparatus communication systems, the wireless communication system 146 may include, for example, one or more dedicated short range communications (dedicated short range communications, DSRC) devices. These devices may include driving apparatuses and/or apparatuses at roadside stations that perform public and/or private data communication with each other.

The power supply 110 may supply power to the components of the driving apparatus 200. In an embodiment, the power supply 110 may be a rechargeable lithium-ion or lead-acid battery. One or more battery packs of such a battery may be configured as a power supply to supply power to the components of the driving apparatus 200. In some embodiments, the power supply 110 and the energy source 119 may be implemented together, for example, in some pure electric vehicles.

Optionally, one or more of the foregoing components may be installed separately from or associated with the driving apparatus 200. For example, the memory 114 may be partially or completely separated from the driving apparatus 200. The foregoing components may be communicatively coupled together in a wired and/or wireless manner.

Optionally, the foregoing components are merely examples. In actual application, components in the foregoing modules may be added or deleted based on an actual requirement. FIG. 2a should not be understood as a limitation on this embodiment of this application.

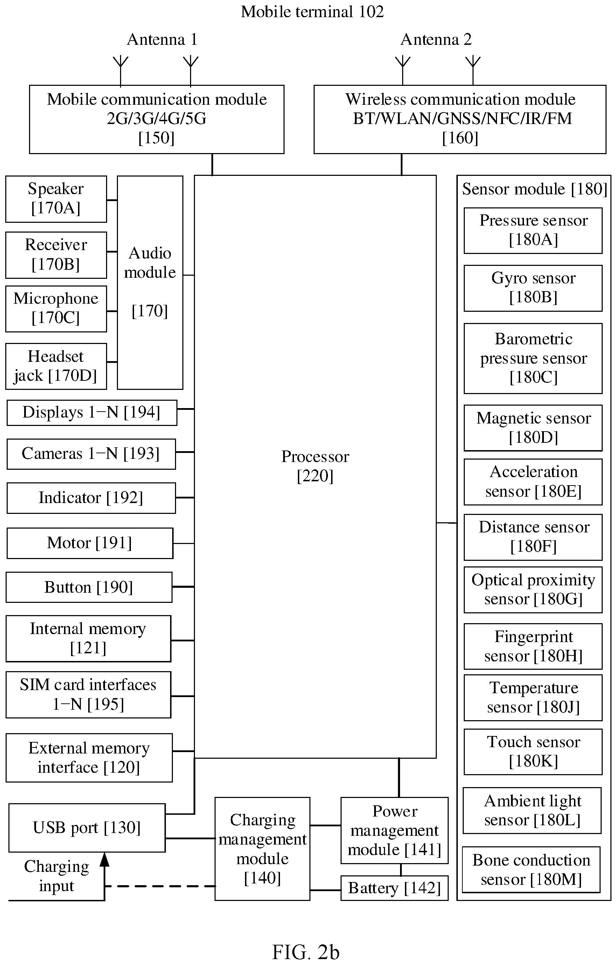

For ease of understanding, the following describes, by using an example, a structure of a mobile terminal 102 provided in an embodiment of this application. FIG. 2b is a schematic diagram of a structure of a terminal device according to an embodiment of this application.

As shown in FIG. 2b, the mobile terminal 102 may include a processor 220, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the mobile terminal 102. In some other embodiments of this application, the mobile terminal 102 may include more or fewer parts than those shown in the figure, or combine some parts, or split some parts, or have different part arrangements. The parts shown in the figure may be implemented by hardware, software, or a combination of software and hardware.

The processor 220 may include one or more processing units. For example, the processor 220 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 220, and is configured to store instructions and data. In some embodiments, the memory in the processor 220 is a cache. The memory may store instructions or data that is just used or is cyclically used by the processor 220. If the processor 220 needs to use the instructions or the data again, the processor 220 may directly invoke the instructions or the data from the memory. This avoids repeated access and reduces a waiting time of the processor 220, to improve system efficiency.

In some embodiments, the processor 220 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general purpose input/output (general purpose input/output, GPIO) interface, a subscriber identification module (subscriber identification module, SIM) interface, a universal serial bus (universal serial bus, USB) port, and/or the like.

The I2C interface is a bidirectional synchronization serial bus, and includes one serial data line (serial data line, SDA) and one serial clock line (serial clock line, SCL). In some embodiments, the processor 220 may include a plurality of groups of I2C buses. The processor 220 may be separately coupled to the touch sensor 180K, a charger, a flash, the camera 193, and the like through different I2C bus interfaces. For example, the processor 220 may be coupled to the touch sensor 180K through the I2C interface, so that the processor 220 communicates with the touch sensor 180K through the I2C bus interface, to implement a touch function of the mobile terminal 102.

The I2S interface may be configured to perform audio communication. In some embodiments, the processor 220 may include a plurality of groups of I2S buses. The processor 220 may be coupled to the audio module 170 through the I2S bus, to implement communication between the processor 220 and the audio module 170. In some embodiments, the audio module 170 may transfer an audio signal to the wireless communication module 160 through the I2S interface, to implement a function of answering a call through a Bluetooth headset.

The PCM interface may also be used for audio communication, and analog signal sampling, quantization, and coding. In some embodiments, the audio module 170 may be coupled to the wireless communication module 160 through the PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 220 and the wireless communication module 160. For example, the processor 220 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI may be configured to connect the processor 220 and a peripheral component such as the display 194 or the camera 193. The MIPI interface includes a camera serial interface (camera serial interface, CSI), a display serial interface (display serial interface, DSI), and the like. In some embodiments, the processor 220 communicates with the camera 193 through the CSI, to implement a photographing function of the mobile terminal 102. The processor 220 communicates with the display 194 through the DSI, to implement a display function of the mobile terminal 102.

The GPIO interface may be configured by software. The GPIO interface may be configured as a control signal or a data signal. In some embodiments, the GPIO interface may be configured to connect the processor 220 and the camera 193, the display 194, the wireless communication module 160, the audio module 170, the sensor module 180, or the like. The GPIO interface may alternatively be configured as an I2C interface, an I2S interface, a UART interface, an MIPI interface, or the like.

Specifically, a video captured by the camera 193 may be transferred to the processor 220 through the foregoing described interface (for example, the CSI or the GPIO interface) that is used to connect the camera 193 and the processor 220.

The USB port 130 is an interface that conforms to a USB standard specification, and may be specifically a mini USB port, a micro USB port, a USB Type C port, or the like. The USB port 130 may be configured to be connected to the charger to charge the mobile terminal 102, or may be configured to transmit data between the mobile terminal 102 and a peripheral device, or may be configured to be connected to a headset, to play audio by using the headset. The interface may be further configured to be connected to another electronic device, for example, an AR device.

It can be understood that an interface connection relationship between modules illustrated in this embodiment of the present invention is merely an example for description, and does not constitute a limitation on the structure of the mobile terminal 102. In some other embodiments of this application, different interface connection manners in the foregoing embodiments or a combination of a plurality of interface connection manners may alternatively be used for the mobile terminal 102.

The charging management module 140 is configured to receive a charging input from the charger. The charger may be a wireless charger, or may be a wired charger. In some embodiments of wired charging, the charging management module 140 may receive a charging input from a wired charger through the USB port 130. In some embodiments of wireless charging, the charging management module 140 may receive a wireless charging input through a wireless charging coil of the mobile terminal 102. The charging management module 140 may further supply power to the mobile terminal by using the power management module 141 while charging the battery 142.

The power management module 141 is configured to be connected to the battery 142, the charging management module 140, and the processor 220. The power management module 141 receives an input of the battery 142 and/or the charging management module 140, and supplies power to the processor 220, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 220. In some other embodiments, the power management module 141 and the charging management module 140 may alternatively be disposed in a same device.

A wireless communication function of the mobile terminal 102 may be implemented by using the antenna 1, the antenna 2, the mobile communication module 150, the wireless communication module 160, the modem processor, the baseband processor, or the like.

The antenna 1 and the antenna 2 are configured to transmit and receive an electromagnetic wave signal. Each antenna in the mobile terminal 102 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the mobile terminal 102 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the received electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 220. In some embodiments, at least some functional modules of the mobile communication module 150 may be disposed in a same device as at least some modules of the processor 220.

The modem processor may include a modulator and a demodulator. The modulator is configured to modulate a to-be-sent low-frequency baseband signal into a medium/high frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 220, and is disposed in a same device as the mobile communication module 150 or another functional module.

The wireless communication module 160 may provide a wireless communication solution that is applied to the mobile terminal 102 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs modulation and filtering processing on an electromagnetic wave signal, and sends the processed signal to the processor 220. The wireless communication module 160 may further receive a to-be-sent signal from the processor 220, perform frequency modulation and amplification on the signal, and convert the signal into an electromagnetic wave for radiation through the antenna 2.

In some embodiments, the antenna 1 of the mobile terminal 102 is coupled to the mobile communication module 150, and the antenna 2 is coupled to the wireless communication module 160, so that the mobile terminal 102 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The mobile terminal 102 implements a display function by using the GPU, the display 194, the application processor, or the like. The GPU is a microprocessor for image processing, and is connected to the display 194 and the application processor. The GPU is configured to: perform mathematical and geometric computation, and render an image. The processor 220 may include one or more GPUs, and execute a program instruction to generate or change display information. Specifically, one or more GPUs in the processor 220 may implement an image rendering task.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniLED, a microLED, a micro-OLED, a quantum dot light emitting diode (quantum dot light emitting diode, QLED), or the like. In some embodiments, the mobile terminal 102 may include one or N displays 194, where N is a positive integer greater than 1. The display 194 may display recommendation information in embodiments of this application.

The mobile terminal 102 may implement a photographing function by using the ISP, the camera 193, the video codec, the GPU, the display 194, the application processor, or the like.

The ISP is configured to process data fed back by the camera 193.

The camera 193 is configured to capture a static image or a video.

The digital signal processor is configured to process a digital signal, and may process another digital signal in addition to the digital image signal. For example, when the mobile terminal 102 selects a frequency, the digital signal processor is configured to perform Fourier transformation on frequency energy.

The video codec is configured to compress or decompress a digital video. The mobile terminal 102 may support one or more video codecs. Therefore, the mobile terminal 102 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement applications such as intelligent cognition of the mobile terminal 102, for example, image recognition, facial recognition, voice recognition, and text understanding.

The external memory interface 120 may be configured to be connected to an external storage card, for example, a micro SD card, to extend a storage capability of the mobile terminal 102. The external storage card communicates with the processor 220 through the external memory interface 120, to implement a data storage function. For example, files such as music and a video are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) created in a process of using the mobile terminal 102, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 220 runs the instructions stored in the internal memory 121, and/or instructions stored in memory disposed in the processor, to execute various function applications and data processing of the mobile terminal 102.

The mobile terminal 102 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to code and decode an audio signal. In some embodiments, the audio module 170 may be disposed in the processor 220, or some functional modules in the audio module 170 are disposed in the processor 220.

The speaker 170A, also referred to as a "horn", is configured to convert an electrical audio signal into a sound signal. The mobile terminal 102 may listen to music or listen to a hands-free call by using the speaker 170A.

The receiver 170B, also referred to as an "earpiece", is configured to convert an electrical audio signal into a sound signal. When a call is answered or voice information is received through the mobile terminal 102, the receiver 170B may be put close to a human ear to listen to a voice.

The microphone 170C, also referred to as a "mike" or "mic", is configured to convert a sound signal into an electrical signal. When making a call or sending voice information, a user may make a sound near the microphone 170C through the mouth of the user, to input a sound signal into the microphone 170C. The mobile terminal 102 may be provided with at least one microphone 170C. In some other embodiments, two microphones 170C may be disposed in the mobile terminal 102. In addition to collecting a sound signal, the microphones may further implement a noise reduction function. In some other embodiments, three, four, or more microphones 170C may be disposed in the mobile terminal 102, to collect a sound signal, reduce noise, recognize a sound source, implement a directional recording function, and the like.

The headset jack 170D is configured to be connected to a wired headset. The headset jack 170D may be a USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. The gyro sensor 180B may be configured to determine a moving posture of the mobile terminal 102. The magnetic sensor 180D includes a Hall sensor. The acceleration sensor 180E may detect an acceleration value of the mobile terminal 102 in various directions (usually on three axes). The distance sensor 180F is configured to measure a distance. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch device". The touch sensor 180K may be disposed on the display 194. The touch sensor 180K and the display 194 form a touchscreen The touch sensor 180K is configured to detect a touch operation performed on or near the touch sensor 180K. The touch sensor may transfer the detected touch operation to the application processor, to determine a touch event type. The display 194 may be configured to provide a visual output related to the touch operation. In some other embodiments, the touch sensor 180K may also be disposed on a surface of the mobile terminal 102 at a location different from that of the display 194. The bone conduction sensor 180M may obtain a vibration signal.

The button 190 includes a power button, a volume button, and the like. The button 190 may be a mechanical button, or may be a touch button. The mobile terminal 102 may receive a key input, and generate a key signal input related to a user setting and function control of the mobile terminal 102.

The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the mobile terminal 102. The mobile terminal 102 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 together. The plurality of cards may be of a same type or different types. The SIM card interface 195 is compatible with different types of SIM cards. The SIM card interface 195 may also be compatible with an external memory card. The mobile terminal 102 interacts with a network by using the SIM card, to implement functions such as a call and data communication. In some embodiments, an eSIM, namely, an embedded SIM card, is used for the mobile terminal 102. The eSIM card may be embedded into the mobile terminal 102, and cannot be separated from the mobile terminal 102.

A layered architecture, an event-driven architecture, a microkernel architecture, a microservice architecture, or a cloud architecture may be used for a software system of the mobile terminal 102. In this embodiment of the present invention, an Android system with a layered architecture is used as an example to describe a software structure of the mobile terminal 102.

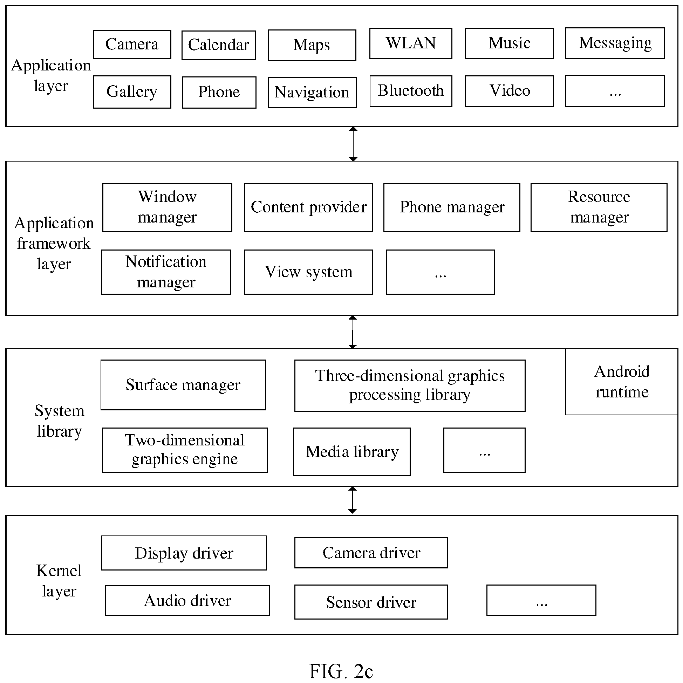

FIG. 2c is a block diagram of a software structure of a mobile terminal 102 according to an embodiment of this disclosure.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 2c, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2c, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to store and obtain data, so that the data can be accessed by an application. The data may include a video, an image, audio, a made call, an answered call, a browsing history and bookmark, a phonebook, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile terminal 102, for example, management of a call status (including answering, declining, or the like).

The resource manager provides various resources for the application, for example, a localized string, an icon, a picture, a layout file, and a video file.

The notification manager enables the application to display notification information in the status bar, and may be configured to convey a notification-type message. The displayed notification information may automatically disappear after a short pause without a need to perform user interaction. For example, the notification manager is configured to notify download completion, provide a message notification, and the like. The notification manager may further be a notification that appears in a top status bar of a system in a form of a graph or a scroll bar text, for example, a notification of an application running in the background, or may be a notification that appears on a screen in a form of a dialog window. For example, text information is prompted in the status bar, a prompt tone is produced, the mobile termial, or an indicator blinks.

Android runtime includes a core library and a virtual machine. The Android runtime is responsible for scheduling and management of the Android system.

The core library includes two parts: One part is a function that needs to be called in java language, and the other part is a core library of Android.

The application layer and the application framework layer run on the virtual machine. The virtual machine converts a java file at the application layer and the application framework layer into a binary file for execution. The virtual machine is configured to perform functions such as object lifecycle management, stack management, thread management, security and abnormality management, and garbage collection.

The system library may include a plurality of functional modules such as a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording of a plurality of common audio and video formats, a static image file, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, an information recommendation method provided in embodiments of this application is described with reference to the accompanying drawings and application scenarios.

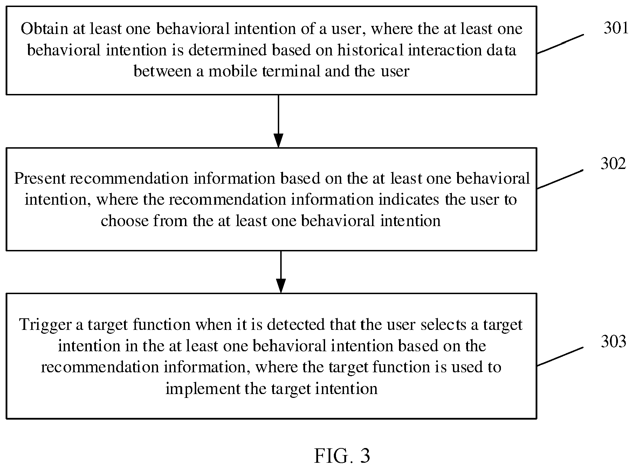

FIG. 3 shows a procedure of an information recommendation method according to an embodiment of this application. As shown in FIG. 3, the information recommendation method provided in this embodiment of this application includes the following steps.

301: Obtain at least one behavioral intention of a user, where the at least one behavioral intention is determined based on historical interaction data between a mobile terminal and the user.

In this embodiment of this application, because a vehicle-mounted terminal has low usability, before the user interacts with the vehicle-mounted terminal, the vehicle-mounted terminal may capture, from another electronic device, historical interaction data generated when the user uses the electronic device, and infer a current possible behavioral intention of the user based on the captured historical interaction data, to reduce interaction costs between the user and the vehicle-mounted terminal. Based on the inferred behavioral intention, the vehicle-mounted terminal actively seeks to interact with the user, and obtains intention confirmation from the user, and the user responds to interaction of the vehicle-mounted terminal, to implement the behavioral intention more conveniently.

In this embodiment of this application, historical interaction data (optionally, the historical interaction data is generated recently) between the user and a mobile terminal is used as a basis, and the current possible behavioral intention of the user is recognized through semantic analysis performed on the historical interaction data. In this way, the current possible behavioral intention of the user can be obtained.

### Vehicle-mounted terminal:

The vehicle-mounted terminal is a control terminal fastened in a vehicle compartment, and the vehicle-mounted terminal may control driving of a vehicle and a functional implementation within a cockpit. For example, the vehicle-mounted terminal may include some or all of the computer system 112, the user interface 116, and the peripheral device 108 shown in FIG. 2a.

### Mobile terminal:

The mobile terminal is a mobile portable terminal, has high usability, may communicate and interact with the user conveniently, and is conveniently operated, for example, is a mobile phone or iPad.

The following first describes a condition for triggering execution of step 301, that is, describes a case in which the vehicle-mounted terminal obtains the at least one behavioral intention of the user.

In a possible implementation, the vehicle-mounted terminal may obtain (actively obtain or passively obtain) the at least one behavioral intention of the user based on a case in which it is detected that a data connection is established with the mobile terminal. A connection manner may be a direct connection between the vehicle-mounted terminal and the mobile terminal or an indirect connection implemented by using a cloud-side server.

### 1. Based on a case in which it is detected that a direct connection is established with the mobile terminal

In this embodiment of this application, the vehicle-mounted terminal may directly establish a communication connection to the mobile terminal in a connection manner such as Bluetooth or Wi-Fi. After the mobile terminal establishes a direct connection to the vehicle-mounted terminal, the vehicle-mounted terminal may obtain the at least one behavioral intention.

In a possible implementation, after the vehicle-mounted terminal establishes a direct connection to the mobile terminal, the vehicle-mounted terminal may send an obtaining signal to the mobile terminal. After receiving the signal, the mobile terminal may transmit cached historical interaction data to the vehicle-mounted terminal, and further, the vehicle-mounted terminal may determine the at least one behavioral intention of the user based on the historical interaction data between the mobile terminal and the user.

In a possible implementation, after the vehicle-mounted terminal establishes a direct connection to the mobile terminal, the vehicle-mounted terminal may send an obtaining signal to the mobile terminal. After receiving the signal, the mobile terminal may determine the at least one behavioral intention of the user based on the historical interaction data between the mobile terminal and the user, and transmit the at least one behavioral intention of the user to the vehicle-mounted terminal, and further, the terminal device may obtain the at least one behavioral intention of the user.

In a possible implementation, after the vehicle-mounted terminal establishes a direct connection to the mobile terminal, the mobile terminal may actively transmit cached historical interaction data to the vehicle-mounted terminal, and further, the terminal device may determine the at least one behavioral intention of the user based on the historical interaction data between the mobile terminal and the user.

In a possible implementation, after the vehicle-mounted terminal establishes a direct connection to the mobile terminal, the mobile terminal may determine the at least one behavioral intention of the user based on the historical interaction data between the mobile terminal and the user, and actively transmit the at least one behavioral intention of the user to the vehicle-mounted terminal, and further, the terminal device may determine the at least one behavioral intention of the user based on the historical interaction data between the mobile terminal and the user.

In a possible implementation, the vehicle-mounted terminal may establish a direct connection to the mobile terminal when detecting that a distance from a geographical location of the mobile terminal is less than a threshold (the threshold may be 0.01 meter, 0.5 meter, 1 meter, 2 meters, 5 meters, or 20 meters), or may establish a direct connection to the mobile terminal after the vehicle-mounted terminal is powered on.

### 2. Based on a case in which it is detected that an indirect connection to the mobile terminal is implemented by using the cloud-side server

In a possible implementation, the mobile terminal may transfer the historical interaction data between the mobile terminal and the user to the cloud-side server, the cloud-side server determines the at least one behavioral intention of the user based on the historical interaction data between the mobile terminal and the user, the cloud-side server transfers the at least one behavioral intention of the user to the vehicle-mounted terminal, and further, the vehicle-mounted terminal may obtain the at least one behavioral intention of the user.

In a possible implementation, a target application is run on the vehicle-mounted terminal, and an account to which the mobile terminal belongs is logged in to in the target application. The vehicle-mounted terminal may obtain historical interaction data generated when the user uses the target application on the mobile terminal, and obtain the at least one behavioral intention of the user.

In this embodiment of this application, a same account is logged in to on the mobile terminal and the vehicle-mounted terminal (for example, a same account is logged in to in voice assistants of the mobile terminal and the vehicle terminal). The mobile terminal and the vehicle-mounted terminal are both connected to the cloud-side server by using the account. The cloud-side server serves as a data transit station. The mobile terminal transfers data (the historical interaction data or the behavioral intention) to the cloud-side servercloud-side server and the vehicle-mounted terminal obtains data from the cloud-side server, or the cloud-side server synchronizes data to the vehicle-mounted terminal. In this way, the mobile terminal and the vehicle-mounted terminal each establish a data connection, and a current interaction device can obtain the historical interaction data or the behavioral intention of the mobile terminal.

It should be understood that the cloud-side server may provide a caching function. A small storage block is allocated to each account as a cache block, and the cache block is used to cache data. A caching mechanism is the same as a caching mechanism of software on the mobile terminal. The cache block may store historical interaction data generated in a latest time period or several pieces of recent historical interaction data. During caching, the mobile terminal may actively perform caching. In other words, the mobile terminal actively caches the historical interaction data in the cloud-side server. Alternatively, after receiving a cache obtaining signal of the vehicle-mounted terminal, the cloud-side server synchronizes the historical interaction data from the mobile terminal, to implement caching.

It should be understood that, the foregoing connection (direct or indirect connection) between the mobile terminal and the vehicle-mounted terminal may be initiated by the mobile terminal, or may be initiated by the vehicle-mounted terminal.

Historical interaction data between the user and the mobile terminal:

In some scenarios, the user may interact with the mobile terminal, and semantics of the historical interaction data between the user and the mobile terminal may carry the behavioral intention of the user, or the behavioral intention of the user may be inferred based on the historical interaction data between the user and the mobile terminal. For example, when the user searches for an intended destination (Place A) by using a map application on the mobile terminal, such search content (Place A) may include the behavioral intention (navigating to a geographicallocation Place A) of the user. For another example, when the user opens a music application by using the voice assistant on the mobile terminal, and searches for and plays music A, a music search record may include the behavioral intention (wanting to play music A) of the user.

Therefore, in this embodiment of this application, the at least one behavioral intention of the user may be determined based on the historical interaction data between the user and the mobile terminal.

The historical interaction data may be historical interaction data between the user and an application or the voice assistant on the mobile terminal. The behavioral intention of the user is usually included in interaction between the user and an application of this type. The application may be a life service-type application, for example, map software, application software with a function of querying a merchant and a merchant address, or the voice assistant (or referred to as an intelligent assistant).

It should be understood that the application may be triggered by the user based on the voice assistant for invoking and execution, and further, the voice assistant may capture historical interaction data between the application and the user from the application. Therefore, a voice assistant of the vehicle-mounted terminal may obtain historical interaction data of a voice assistant of the mobile terminal, and further infer the current possible user intention.

The voice assistant is used as an example. A voice assistant program is installed on the mobile terminal. When entering a voice instruction, the user may activate the voice assistant by using a preset interactive gesture, and the voice assistant prepares to obtain the voice instruction. For the interactive gesture for activating the voice assistant, refer to an existing wakeup gesture, for example, touching and holding a power button or a knuckle tap.

After the voice assistant is activated, the voice assistant obtains the voice instruction of the user, parses the voice instruction, and starts an application on the mobile terminal based on parsing of the instruction. In this interaction process, man-machine interaction data generated by the mobile terminal includes interaction data between the user and the voice assistant, and running data of an application started by the voice assistant. In addition, the man-machine interaction data of the mobile terminal is stored in a memory (for example, a cache) of the mobile terminal. When the voice assistant of the vehicle-mounted terminal obtains the historical interaction data by using the voice assistant of the mobile terminal, the interaction data between the user and the voice assistant (of the mobile terminal) may be obtained, or the running data of the application started by the voice assistant (of the mobile terminal) may be obtained by using the voice assistant (of the mobile terminal).

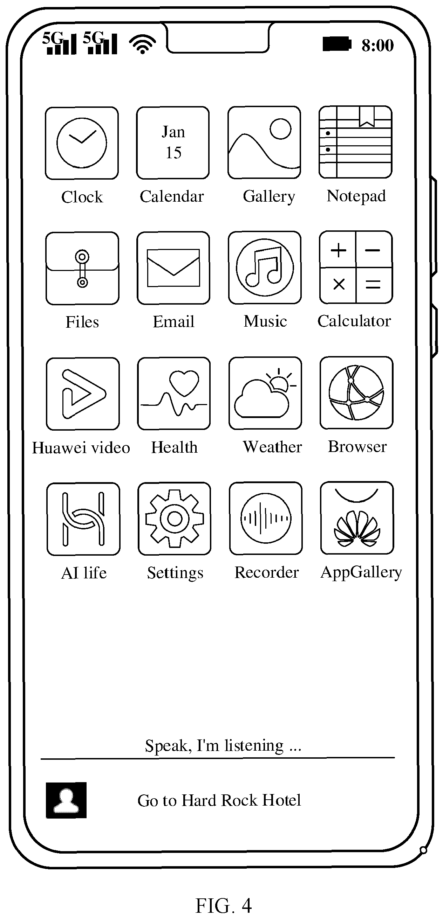

For example, as shown in FIG. 4, the user may interact with the voice assistant on the mobile terminal by using a voice. Content of interaction is as follows: The user enters "Go to Hard Rock Hotel", and corresponding historical interaction data is a voice of "Go to Hard Rock Hotel", or may be a route search record about Hard Rock Hotel in a map application on the mobile terminal.

The historical interaction data may be an interactive statement such as a query-type interactive statement that is entered by the user on the mobile terminal by using a text or a voice, or an operation record generated by operating some functions in an application (for example, opening links of some merchants).

A user intention obtained by the vehicle-mounted terminal from the historical interaction data needs to be a recent possible behavioral intention of the user, to ensure accuracy of the behavioral intention that is of the user and that is obtained by the vehicle-mounted terminal.

Specifically, the historical interaction data may be interaction data between the mobile terminal and the user that is generated within a preset time period (for example, the preset time period may be 1 second, 30 seconds, 1 minute, 10 minutes, half an hour, or one hour) before a current moment.

The historical interaction data may be interaction data between the mobile terminal and the user that is generated within a preset quantity of interaction times (for example, the preset quantity of interaction times may be one time, three times, or ten times) before a current moment. It should be understood that, in an implementation, a quantity of interaction times within which selected historical interaction data is generated before the current moment is not too large.

The historical interaction data is data that can reflect the behavioral intention of the user, and the semantics of the historical interaction data includes at least one behavioral intention of the user.

It should be understood that, in a possible implementation, the cloud-side server may obtain a large amount of historical interaction data between the user and the mobile terminal, classify the historical interaction data, classify a similar question as a same question, and send collated historical interaction data to the mobile terminal or the vehicle-mounted terminal. A reason is as follows: When the user searches for information and obtains no ideal answer, a same question may be searched in another manner (by using another statement). For similar questions that are searched in different manners, the cloud-side server may combine the similar questions into same historical interaction data, and record and store only one of the similar questions, or select one similar question as representative historical interaction data from the similar questions, and send the selected similar question to the mobile terminal or the vehicle-mounted terminal.

In this embodiment of this application, the behavioral intention of the user may include a navigation intention or an intention associated with function control within the cockpit. The navigation intention is that the user wants to go from Place A to Place B.

The intention associated with function control within the cockpit is to control, by using the vehicle-mounted terminal, hardware or a software application in the cockpit to perform a related function. For example, the vehicle-mounted terminal may control a speaker to play music, control a display and a speaker of an on-board computer to play a video, control a microphone to perform a voice call, control memo software to record memo content, control a vehicle-mounted air conditioner to adjust a temperature in the compartment, control to adjust a seat forward/backward/leftward/rightward and a tilt amplitude of the seat, and control a door, a vehicle window, and a sunroof to be opened or closed.

The following describes how the vehicle-mounted terminal obtains the at least one behavioral intention of the user.

In a possible implementation, the mobile terminal may determine the at least one behavioral intention of the user based on the historical interaction data between the mobile terminal and the user, and then transfer the at least one behavioral intention to the vehicle-mounted terminal; and further, the vehicle-mounted terminal may obtain the at least one behavioral intention of the user (or the mobile terminal transfers the at least one behavioral intention to a cloud-side server, and the cloud-side server forwards the at least one behavioral intention to the vehicle-mounted terminal).

In a possible implementation, the mobile terminal may transfer the historical interaction data between the mobile terminal and the user to the vehicle-mounted terminal, and the vehicle-mounted terminal determines the at least one behavioral intention of the user based on the historical interaction data between the mobile terminal and the user (or the mobile terminal transfers the historical interaction data between the mobile terminal and the user to a cloud-side server, and the cloud-side server forwards the historical interaction data to the vehicle-mounted terminal).

In a possible implementation, the mobile terminal may transfer the historical interaction data between the mobile terminal and the user to a cloud-side server, the cloud-side server determines the at least one behavioral intention of the user based on the historical interaction data between the mobile terminal and the user, the cloud-side server transfers the at least one behavioral intention of the user to the vehicle-mounted terminal, and further, the vehicle-mounted terminal may obtain the at least one behavioral intention of the user.

The following describes how to determine the at least one behavioral intention of the user based on the historical interaction data between the mobile terminal and the user.

In this embodiment of this application, the mobile terminal, the vehicle-mounted terminal, or the cloud-side server may perform behavioral intention recognition on the historical interaction data based on a semantic recognition algorithm, a neural network model, or the like, and further obtain the at least one behavioral intention of the user.

In an implementation, the historical interaction data may be an interactive statement such as a query-type interactive statement that is entered by the user on the mobile terminal by using a text or a voice. The interactive statement such as the query-type interactive statement may be one or more sentences, and the behavioral intention of the user may be determined by performing semantic recognition on the one or more sentences as a whole. For example, the historical interaction data is "Where is Store A" entered by the user in the voice assistant of the mobile terminal. After semantic recognition is performed on the statement of "Where is Store A", it may be determined that the behavioral intention of the user is "Navigate to Store A".

In an implementation, the vehicle-mounted terminal is also provided with a voice assistant, and the obtained historical interaction data may be directly entered into the voice assistant, to see whether the voice assistant can understand a behavioral intention that is of the user and that is related to the historical interaction data. If the voice assistant can understand the behavioral intention, the behavioral intention that is of the user and that is determined by the voice assistant may be directly obtained.

As shown in FIG. 4, the user may search for a destination on the mobile terminal by using a voice, and the vehicle-mounted terminal may be directly connected to the mobile terminal, to obtain the historical interaction data between the user and the mobile terminal. Alternatively, the mobile terminal performs cloud synchronization for one time, and synchronizes a historical interaction record to the cloud-side server, and the vehicle-mounted terminal performs synchronization with the cloud-side server, to obtain the historical interaction data. As shown in FIG. 4, the historical interaction data is "Go to Hard Rock Hotel", and the behavioral intention included in the historical interaction data is a navigation intention (which is specifically a navigation intention whose destination is Hard Rock Hotel).

In an implementation, if the voice assistant cannot understand or determine the behavioral intention of the user based on semantic recognition, the user may perform word segmentation processing on the historical interaction data, and obtain the behavioral intention of the user based on semantics of each word segment (if the historical interaction data is a voice, the voice instruction may be converted into a text, and then a word segmentation operation is performed on the text). In addition, when the historical interaction data is split, a word sequence and a word quantity of the historical interaction data may not be changed when the historical interaction data is split, so that the user easily establishes a relationship with a previous interaction instruction in a subsequent presentation. In other words, an instruction word is obtained through splitting based on a word sequence of the historical interaction data, and a split word obtained after splitting is combined as much as possible into a statement that matches a voice expressed by the user. Specifically, when the historical interaction data is split after the voice is translated into a text, a word quantity and a word sequence of the text are not changed as much as possible, and a manner similar to sentence segmentation is used, so that a presentation sequence of the instruction word (or referred to as a word segment) is the same as a voice input of the user. (For example, a statement sequence of the historical interaction data may not be changed. It is equivalent to that the historical interaction data is repeated only once, but word segments are separated from each other).

When word segmentation processing is performed, splitting may be performed based on a specific rule, to obtain some instruction words that conform to a preset type, and semantics of the instruction words can indicate a behavioral intention of the user. Specifically, some categories may be formulated in advance, and during splitting, splitting is performed with reference to the type, so that the instruction word that conforms to the type is obtained through splitting. Splitting may or may not be performed for an instruction word that does not conform to the type. For example, for a specific type, refer to the following table.

| Time type | Location type | Person type | Audio/video type | Environmental feeling |
|---|---|---|---|---|
| Date | Common location such as home/company | Contact name | Audio/video name | Stuffy |
| Time | Point of interest (point of interest, POI) such as a coffee shop/toilet | Telephone number | Audio/video author | Get some fresh air |
| ... | Road name/door number, or the like | ... | Audio/video style/type | ... |
| | ... | | ... | |

For example, an instruction word of the time type may indicate a behavioral intention of an event reminder, an instruction word of the location type may indicate a navigation intention, an instruction word of the person type may indicate a behavioral intention of a voice call, or the like, an instruction word of the audio/video type may indicate a behavioral intention of audio/video playing, and an instruction word of the environment feeling type may indicate another behavioral intention such as air conditioner control or seat adjustment.

302: Present recommendation information based on the at least one behavioral intention, where the recommendation information indicates the user to choose from the at least one behavioral intention.

In this embodiment of this application, after obtaining the at least one behavioral intention of the user, the vehicle-mounted terminal may present the recommendation information based on the at least one behavioral intention.

The recommendation information includes an inferred current possible behavioral intention of the user, and the recommendation information may indicate the user to choose from the at least one behavioral intention. Further, the user may select a current real behavioral intention (which may be referred to as a target intention) based on the recommendation information, and the vehicle-mounted terminal may automatically trigger a corresponding function to implement the target intention selected by the user.

The user does not need to enter the current real behavioral intention on the vehicle-mounted terminal to trigger the corresponding function, but the vehicle-mounted terminal actively seeks to interact with the user based on the behavioral intention, to avoid entering a same question on different terminals for two times. In addition, the behavioral intention is guessed based on an interaction record of the user on the mobile terminal, and represents the current real intention of the user in a high probability. The user only needs to respond to interaction of the vehicle-mounted terminal, and determines/selects a behavioral intention presented by the vehicle-mounted terminal (for example, taps an option or answers a question), to greatly reduce user-side interaction costs.

In a possible implementation, the recommendation information may be presented in a manner such as a visual manner or an audio manner. The following separately provides descriptions:

### 1. The recommendation information is presented in the visual manner.

In a possible implementation, the at least one behavioral intention may be presented on a display of the vehicle-mounted terminal by using a text, and the text is in a form of a query, specifically, a query about whether the user has the at least one behavioral intention, or a query about a specific behavioral intention of the user in the at least one behavioral intention.

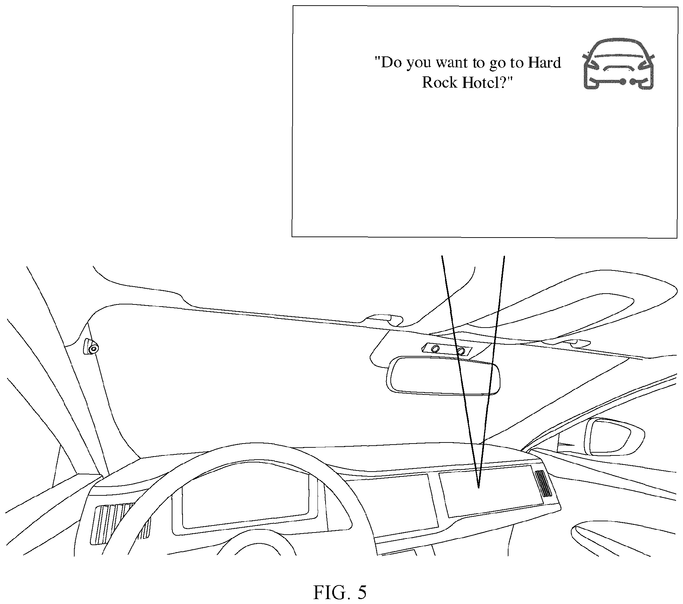

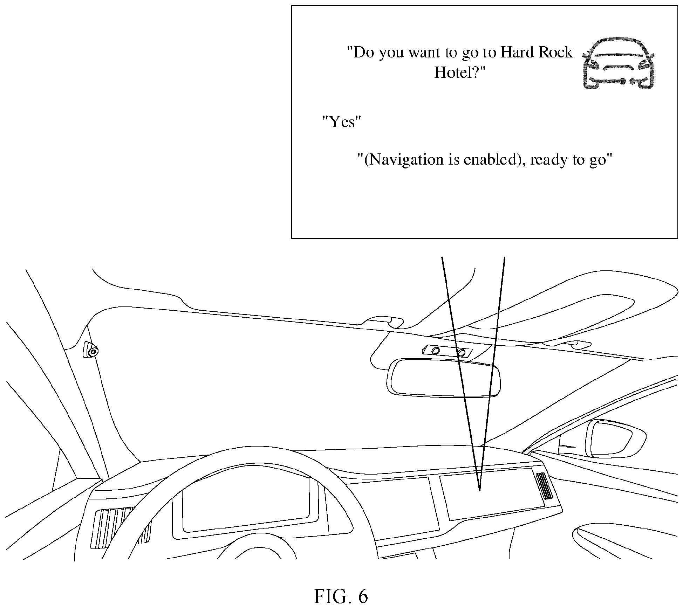

For example, as shown in FIG. 5, if the behavioral intention obtained by the vehicle-mounted terminal is a navigation intention of "Go to Hard Rock Hotel", the vehicle-mounted terminal may control the display to display a query of a question of "Do you want to go to Hard Rock Hotel?", and the user may answer the question of the vehicle-mounted terminal by using a voice, to enter the real behavioral intention into the vehicle-mounted terminal. For example, as shown in FIG. 6, when "Go to Hard Rock Hotel" is really the current real intention of the user, the user may reply "Yes" to the question of the voice assistant by using a voice.

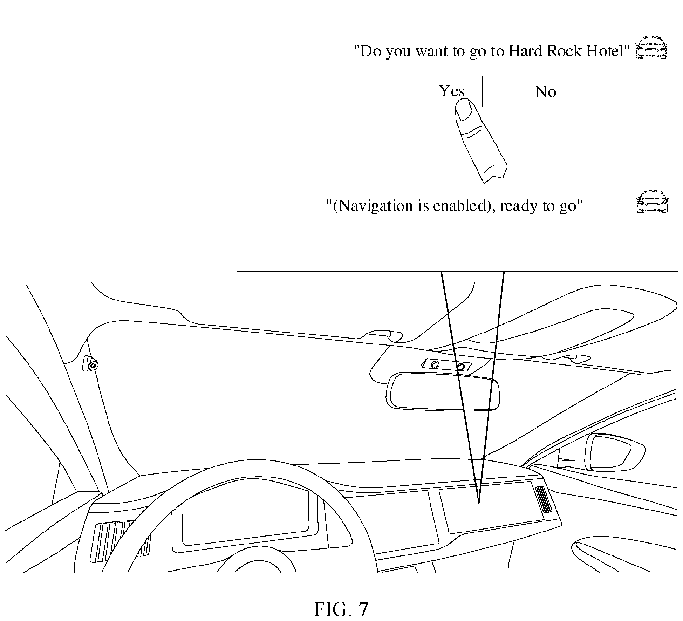

In a possible implementation, the user may tap an option displayed on a touchscreen of the vehicle-mounted terminal, to enter the real behavioral intention into the vehicle-mounted terminal. For example, as shown in FIG. 7, when "Go to Hard Rock Hotel" is really the current real intention of the user, the user may tap an option "Yes" displayed on the touchscreen of the vehicle-mounted terminal, to answer the question of the voice assistant.

In a possible implementation, the recommendation information may be presented by using a function card in a form of a text or picture displayed on the display.

Each function card corresponds to one behavioral intention. The user may enter the target intention into the vehicle-mounted terminal by selecting a function card corresponding to the real behavioral intention (or referred to as the target intention).

The vehicle-mounted terminal may perform word segmentation processing on the historical interaction data, obtain the behavioral intention of the user based on semantics of each word segment (if the historical interaction data is a voice, the voice instruction may be converted into a text, and then a word segmentation operation is performed on the text), may perform associative recommendation on an attribute type of each obtained word segment (for determining the attribute type of each word segment, refer to description of the instruction word in the foregoing embodiment, and details are not described herein again), to obtain a possible behavioral intention that is of the user and that corresponds to each word segment, and further trigger displaying of a function card of a behavioral intention corresponding to each word segment.

For example, when a word segment is a location-type attribute type, a behavioral intention that is of the user and that corresponds to the word segment is a navigation intention; and when the word segment is a person-type attribute type, a behavioral intention that is of the user and that corresponds to the word segment may be a voice call intention.

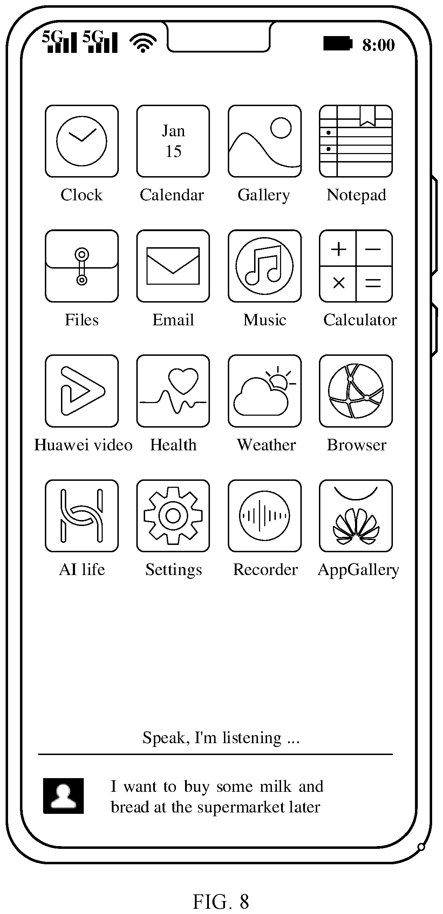

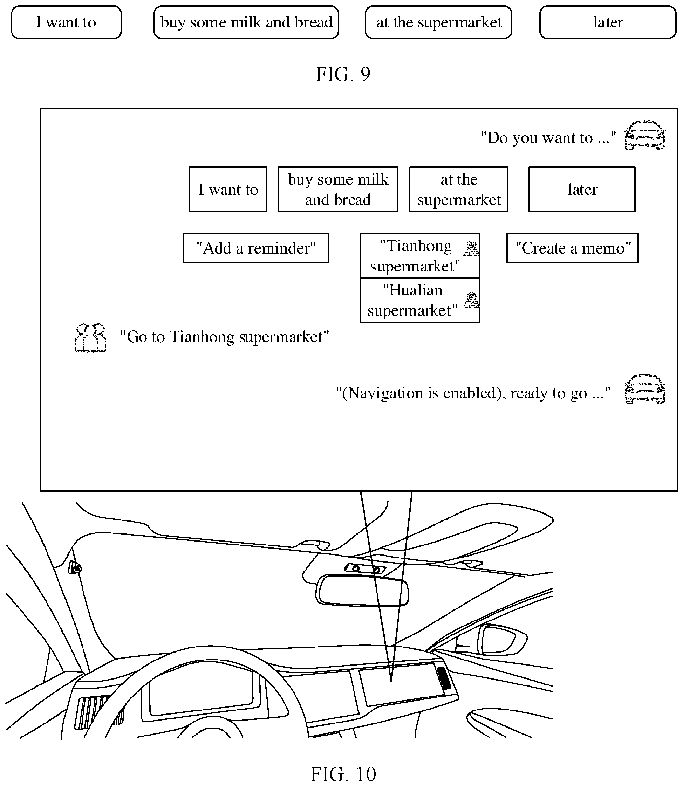

For example, as shown in FIG. 8, if the user may enter information "I want to buy some milk and bread at the supermarket later" into the voice assistant of the mobile terminal by using the voice, the historical interaction data is a text "I want to buy some milk and bread at the supermarket later". If the vehicle-mounted terminal cannot accurately recognize semantics of the text, word segmentation processing may be performed on the text (for a word segmentation processing process, refer to the description in the foregoing embodiment, and details are not described herein again). As shown in FIG. 9, after word segmentation, four instruction words "I want to", "buy some milk and bread", "at the supermarket", and "later" may be obtained, and corresponding function cards are displayed, for example, a function card "Add a reminder", a function card "Tianhong supermarket", a function card "Hualian supermarket", and a function card "Create a memo" shown in FIG. 10. The function card "Add a reminder" corresponds to an event reminder intention, the function card "Tianhong supermarket" and the function card "Hualian supermarket" correspond to a navigation intention, and the function card "Create a memo" corresponds to an event intention record. As shown in FIG. 10, the user may enter the real target intention by using a voice or by tapping a function card. This is not limited herein.

In this embodiment of this application, a presentation sequence of a split word is the same as a presentation sequence in an original statement. If an originally entered statement is a word that is said by the user, a word sequence is not changed for the presentation sequence of the split word, to help wake up a memory of the user. In addition, a complete sentence facilitates understanding of the user.

In a possible implementation, the historical interaction data may be related to the user and an application on the mobile terminal, or may be status data related to the mobile terminal.

In an implementation, because the voice assistant may invoke an application on the mobile terminal, the historical interaction data may be data related to an application that is on the mobile terminal and that is invoked by the user by using the voice assistant. For example, the user says "Play music A" to the voice assistant. If music software A is installed on the mobile terminal, the mobile terminal starts the music software A to play music A. Therefore, the historical interaction data is that the user wants to play music A. After the vehicle-mounted device obtains the historical interaction data, if music software B is installed in an in-vehicle infotainment system, the voice assistant on the vehicle-mounted device may play music A by using the music software B.

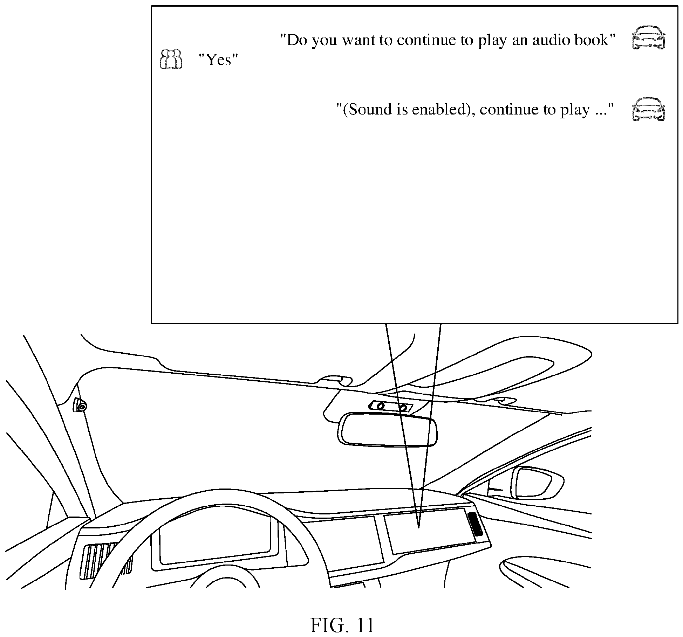

Refer to FIG. 11. If the user may trigger, by using the voice assistant on the mobile terminal, an application related to "audio book", and read a specific audio book, the historical interaction data is reading the audio book, and the voice assistant on the vehicle-mounted terminal may learn that the behavioral intention of the user is continuing to read the audio book. Therefore, an interface shown in FIG. 11 may be presented. In the interface, the voice assistant on the vehicle-mounted terminal may query the user about whether to continue to read the audio book.

It should be understood that, the user may not trigger, by using the voice assistant on the mobile terminal, the application related to "audio book".

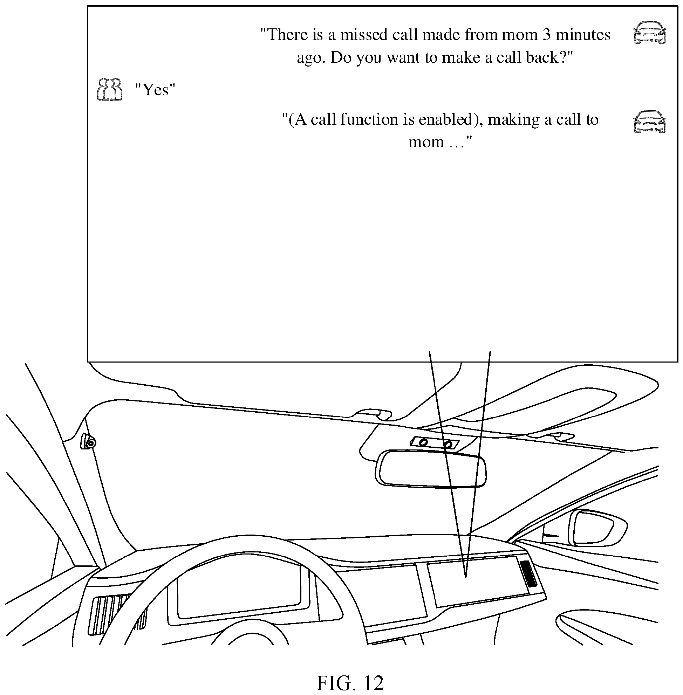

Refer to FIG. 12. If a recent missed call exists on the mobile terminal, the historical interaction data is that a recent missed call exists, and the vehicle-mounted terminal may learn that the behavioral intention of the user is to make a call back. Therefore, an interface shown in FIG. 12 may be presented. In the interface, the vehicle-mounted terminal queries the user about whether to continue to make a call back.

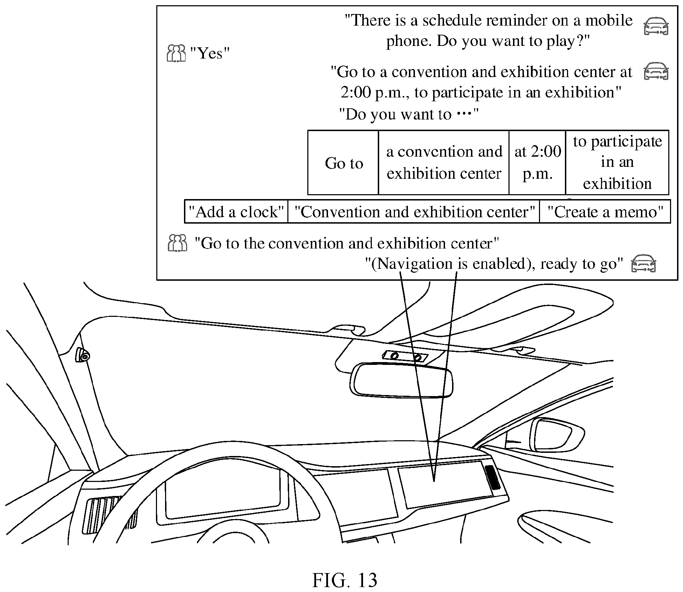

Refer to FIG. 13. If a recent schedule reminder exists on the mobile terminal (the schedule reminder may be recorded by the user by using the voice assistant), the historical interaction data is content of the schedule reminder, and the vehicle-mounted terminal may learn that the behavioral intention of the user is implementing the content of the schedule reminder. Therefore, an interface shown in FIG. 13 may be presented. In the interface, the vehicle-mounted terminal queries the user about whether to play the schedule reminder, and may perform word segmentation and further intention recognition on the content of the schedule reminder, to present an interaction interface shown in FIG. 13.

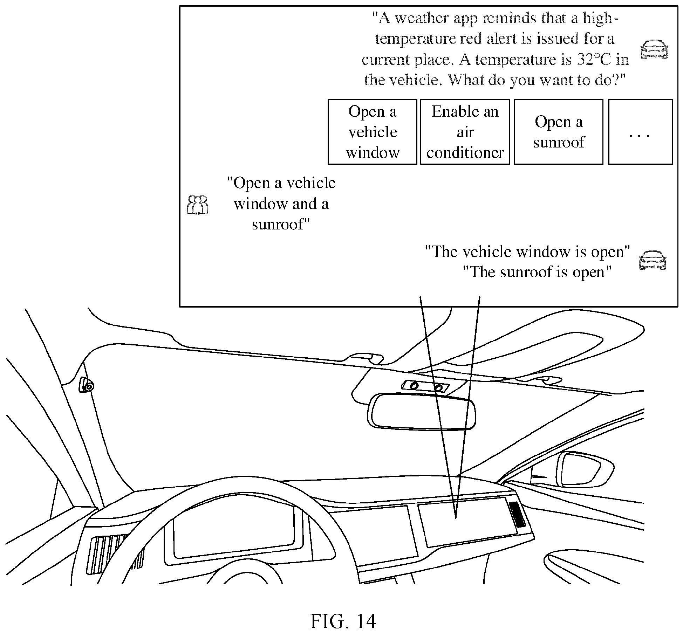

Refer to FIG. 14. If a high-temperature reminder of an application exists on the mobile terminal, the historical interaction data is the high-temperature reminder of the application, and the vehicle-mounted terminal may learn that the behavioral intention of the user is to implement reduction in a temperature of an in-vehicle environment. Therefore, an interface shown in FIG. 14 may be presented. In the interface, the vehicle-mounted terminal queries the user about whether to reduce the temperature of the in-vehicle environment (displays a related function card).

### 2. The recommendation information is presented in the audio manner.

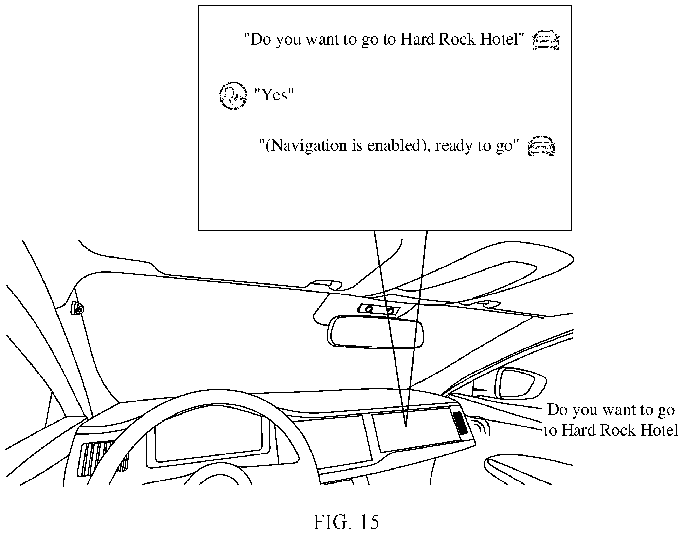

In an implementation, the recommendation information of the vehicle-mounted terminal may be recommended to the user in an audio form. For example, in FIG. 15, after obtaining the behavioral intention "Go to Hard Rock Hotel" of the user, the vehicle-mounted terminal may control a speaker in the vehicle to play the recommendation information "Do you want to go to Hard Rock Hotel?", and interact with the user by querying a question. The user may also answer a question of the vehicle-mounted terminal by using a voice, and the vehicle-mounted terminal determines the target intention of the user.

303: Trigger a target function when it is detected that the user selects a target intention in the at least one behavioral intention based on the recommendation information, where the target function is used to implement the target intention.

In this embodiment of this application, the user may select, from the recommendation information, a behavioral intention that can accurately represent a will of the user, and choose whether to execute the behavior. Further, the vehicle-mounted terminal may trigger execution of the target function, to implement the behavioral intention selected by the user.

In a possible implementation, the user may select the target intention in the at least one behavioral intention by using without limitation to the following manners:
1. The user selects the target intention by touching and interacting with the display of the vehicle-mounted terminal.

When the vehicle-mounted terminal presents the recommendation information on the display by asking a question in a form of a text, the user may answer the question by tapping a function card on the display, to select the target intention in the at least one behavioral intention.

2. The user selects the target intention by using a voice.

When the vehicle-mounted terminal presents the recommendation information on the display by asking a question in a form of a text, the user may select the target intention by using a voice.

When the vehicle-mounted terminal presents the behavioral intention of the user by playing a voice by using the vehicle-mounted speaker, the user may interact with the vehicle-mounted terminal by using a voice, and the vehicle-mounted terminal may convert, into a text, a voice entered by the user, to complete determining of the real behavioral intention (target intention) of the user through semantic recognition.

After obtaining the target intention selected by the user, the vehicle-mounted terminal may trigger a corresponding functional module to implement the target intention.

For example, the vehicle-mounted terminal may implement an event reminder intention by triggering opening of an application related to the event reminder, and the vehicle-mounted terminal may implement a navigation intention by triggering opening of an application related to a navigation application.

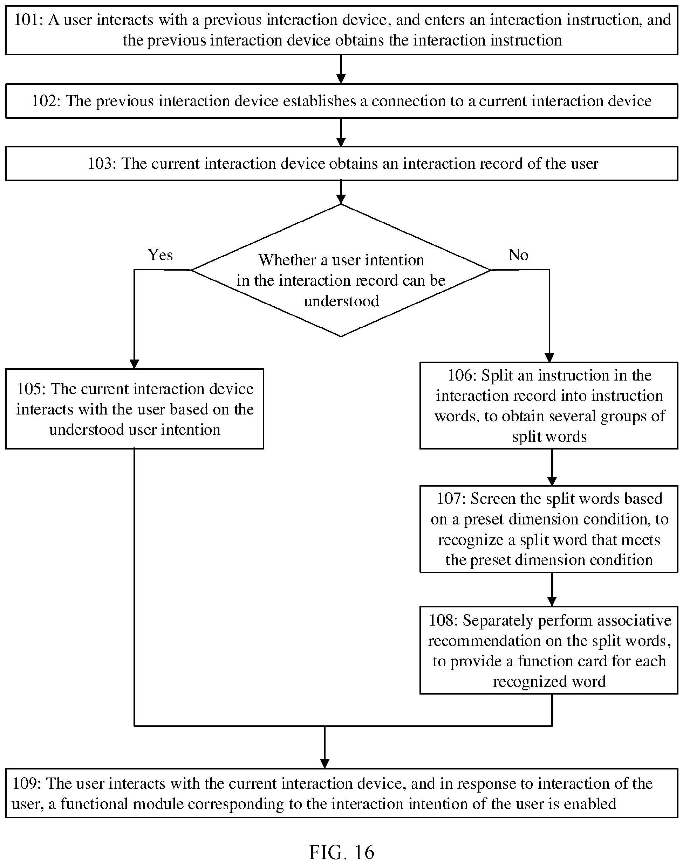

FIG. 16 shows a procedure of an information recommendation method according to an embodiment of this application. Specifically, a user may interact with a previous interaction device (mobile terminal), and enter an interaction instruction, and the previous interaction device obtains the interaction instruction. The previous interaction device establishes a data connection to a current interaction device (vehicle-mounted terminal). The current interaction device obtains an interaction record (historical interaction data) of the user. The current interaction device determines whether the current interaction device can understand a behavioral intention of the user in the interaction record. The current interaction device interacts with the user based on the understood behavioral intention of the user. An instruction in the interaction record is split into instruction words, to obtain several groups of split words. The split words obtained through splitting based on a preset dimension condition are screened, to recognize a split word that meets the preset dimension condition. Associative recommendation is separately performed on the split words, to provide a function card for each recognized split word. The user interacts with the current interaction device. In response to interaction of the user, a functional module corresponding to an interaction intention of the user is enabled.

This embodiment of this application provides an information recommendation method, applied to the vehicle-mounted terminal. The method includes: obtaining at least one behavioral intention of the user, where the at least one behavioral intention is determined based on historical interaction data between the mobile terminal and the user; presenting recommendation information based on the at least one behavioral intention, where the recommendation information indicates the user to choose from the at least one behavioral intention; and triggering a target function when it is detected that the user selects a target intention in the at least one behavioral intention based on the recommendation information, where the target function is used to implement the target intention. In the foregoing manner, a data connection is established between different devices (the mobile terminal and the vehicle-mounted device), so that an interaction record is shared between the different devices. The behavioral intention of the user is understood based on the historical interaction data, and then interaction with the user is actively performed based on the understood behavioral intention. The user does not need to enter the current real behavioral intention on the vehicle-mounted terminal to trigger the corresponding function, but the vehicle-mounted terminal actively seeks to interact with the user based on the behavioral intention, to avoid entering a same question on different terminals for two times. In addition, the behavioral intention is guessed based on an interaction record of the user on the mobile terminal, and represents a current real intention of the user in a high probability. The user only needs to respond to interaction of the vehicle-mounted terminal, and determines/selects a behavioral intention presented by the vehicle-mounted terminal (for example, taps an option or answers a question), to greatly reduce user-side interaction costs.

In addition, a historical interaction record is transferred from the vehicle-mounted device to the mobile terminal, to implement inheritance and continuity of the interaction record, and reduce repeated interaction between the user and the vehicle-mounted device. In addition, objectively, the vehicle-mounted device can also play a function of performing reminding again, to prevent the user from forgetting a thing that the user wants to do.

In addition, in this embodiment of this application, different interaction policies are used based on whether the behavioral intention of the user can be understood based on the historical interaction data. If the behavioral intention of the user can be understood, a query and interaction are directly performed based on the understood behavioral intention. If the behavioral intention of the user cannot be understood, word segmentation processing is performed on the historical interaction data, and the behavioral intention of the user is guessed in terms of a plurality of dimensions of the split word.

In addition, original historical interaction data is formed in a presentation sequence of the split word, the historical interaction data is a word that is said by the user, and a word sequence is not changed for the presentation sequence of the split word, to help wake up a memory of the user. In addition, a complete sentence facilitates understanding of the user.

It should be understood that, in this application, another device (for example, a smart screen) with low usability may also be applied.

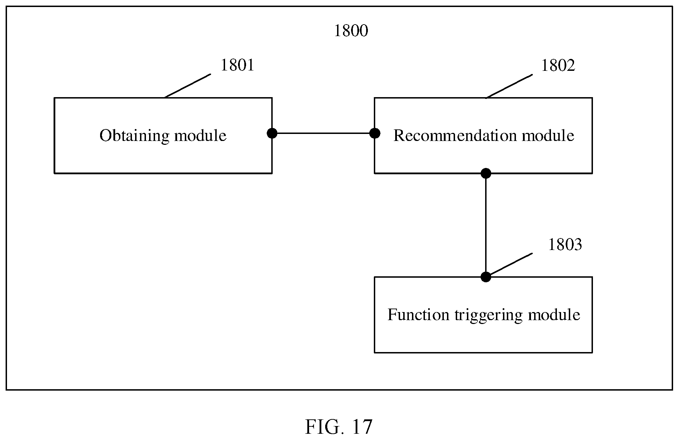

FIG. 17 is a schematic diagram of a structure of an information recommendation apparatus according to an embodiment of this application. As shown in FIG. 17, an information recommendation apparatus 1800 provided in this embodiment of this application includes an obtaining module 1801, a recommendation module 1802, and a function triggering module 1803.

The obtaining module 1801 is configured to obtain at least one behavioral intention of a user. The at least one behavioral intention is determined based on historical interaction data between a mobile terminal and the user.

For a specific description of the obtaining module 1801, refer to the description of step 301 in the foregoing embodiment. Details are not described herein again.

The recommendation module 1802 is configured to present recommendation information based on the at least one behavioral intention. The recommendation information indicates the user to choose from the at least one behavioral intention.

For a specific description of the recommendation module 1802, refer to the description of step 302 in the foregoing embodiment. Details are not described herein again.

The function triggering module 1803 is configured to trigger a target function when it is detected that the user selects a target intention in the at least one behavioral intention based on the recommendation information. The target function is used to implement the target intention.

For a specific description of the function triggering module 1803, refer to the description of step 303 in the foregoing embodiment. Details are not described herein again.

In a possible implementation, the historical interaction data is interaction data between the mobile terminal and the user that is generated within a preset time period before a current moment; or
the historical interaction data is interaction data between the mobile terminal and the user that is generated within a preset quantity of interaction times before a current moment.

In a possible implementation, the historical interaction data is a statement entered by the user in a target application that runs on the mobile terminal; or
the historical interaction data is data generated when the user interacts with a target application that runs on the mobile terminal.

In a possible implementation, semantics of the historical interaction data includes the at least one behavioral intention of the user.

In a possible implementation, the recommendation module 1802 is configured to display at least one function trigger option. Each function trigger option corresponds to one behavioral intention, and each function trigger option is used to trigger a function of implementing a corresponding behavioral intention.

In a possible implementation, the historical interaction data is the statement entered by the user in the target application that runs on the mobile terminal, and the apparatus further includes:
a word segmentation processing module, configured to perform word segmentation processing on the statement, to obtain at least one word segment, where each word segment corresponds to one behavioral intention, where
the recommendation module is configured to: display the at least one word segment, and display a corresponding function trigger option near a display location of each of the at least one word segment.

In a possible implementation, the recommendation module is configured to display and/or play a target statement. The target statement is used to prompt the user whether to enable a function of implementing the at least one behavioral intention.

In a possible implementation, the at least one behavioral intention includes a navigation intention or an intention associated with function control within a cockpit.

In a possible implementation, the intention associated with function control within the cockpit includes at least one of the following:
music playing, video playing, a voice call, a memo content record, an event reminder, air conditioner control, seat adjustment, and sunroof control.

In a possible implementation, the apparatus further includes a detection module, configured to:
before the at least one behavioral intention of the user is obtained, detect that a communication connection is established with the mobile terminal; or detect that a distance from the mobile terminal is less than a threshold; or run the target application, and log in to an account to which the mobile terminal belongs in the target application.

In a possible implementation, a vehicle-mounted terminal is a control terminal fastened in a vehicle compartment, and the mobile terminal is a removable portable terminal.

In a possible implementation, the obtaining module is specifically configured to:
receive the at least one behavioral intention sent by a server or the mobile terminal; or
receive the historical interaction data sent by a server or the mobile terminal, and determine the at least one behavioral intention based on the historical interaction data.

This embodiment of this application provides an information recommendation apparatus, applied to a vehicle-mounted terminal. The apparatus includes: the obtaining module, configured to obtain the at least one behavioral intention of the user, where the at least one behavioral intention is determined based on the historical interaction data between the mobile terminal and the user; the recommendation module, configured to present the recommendation information based on the at least one behavioral intention, where the recommendation information indicates the user to choose from the at least one behavioral intention; and the function triggering module, configured to trigger the target function when it is detected that the user selects the target intention in the at least one behavioral intention based on the recommendation information, where the target function is used to implement the target intention. In the foregoing manner, a data connection is established between different devices (the mobile terminal and the vehicle-mounted device), so that an interaction record is shared between the different devices. The behavioral intention of the user is understood based on the historical interaction data, and then interaction with the user is actively performed based on the understood behavioral intention. The user does not need to enter the current real behavioral intention on the vehicle-mounted terminal to trigger the corresponding function, but the vehicle-mounted terminal actively seeks to interact with the user based on the behavioral intention, to avoid entering a same question on different terminals for two times. In addition, the behavioral intention is guessed based on an interaction record of the user on the mobile terminal, and represents a current real intention of the user in a high probability. The user only needs to respond to interaction of the vehicle-mounted terminal, and determines/selects a behavioral intention presented by the vehicle-mounted terminal (for example, taps an option or answers a question), to greatly reduce user-side interaction costs.

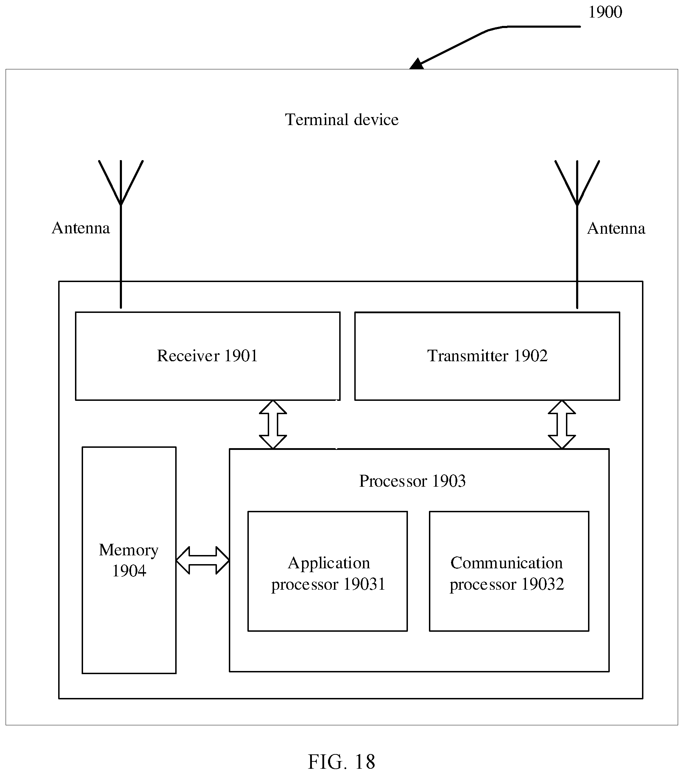

The following describes a terminal device provided in an embodiment of this application. The terminal device may be an information recommendation apparatus in FIG. 18. FIG. 18 is a schematic diagram of a structure of a terminal device according to an embodiment of this application. A terminal device 1900 may be specifically a vehicle-mounted terminal, a virtual reality VR device, a mobile phone, a tablet computer, a notebook computer, an intelligent wearable device, or the like. This is not limited herein. Specifically, the terminal device 1900 includes a receiver 1901, a transmitter 1902, a processor 1903, and a memory 1904 (there may be one or more processors 1903 in the terminal device 1900, and one processor is used as an example in FIG. 18). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provide instructions and data for the processor 1903. A part of the memory 1904 may further include a nonvolatile random access memory (nonvolatile random access memory, NVRAM). The memory 1904 stores a processor and operation instructions, an executable module or a data structure, a subset thereof, or an expanded set thereof. The operation instructions may include various operation instructions, to implement various operations.

The processor 1903 controls an operation of the terminal device. In a specific application, components of the terminal device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1903 or may be implemented by the processor 1903. The processor 1903 may be an integrated circuit chip, and has a signal processing capability. In an implementation process, steps in the method may be implemented by using a hardware integrated logic circuit in the processor 1903, or by using instructions in a form of software. The processor 1903 may be a general-purpose processor, a digital signal processor (digital signal processor, DSP), a microprocessor, or a microcontroller. The processor 1903 may further include an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 1903 may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1904, and the processor 1903 reads information in the memory 1904 and completes the steps in the foregoing methods in combination with hardware of the processor 1903. Specifically, the processor 1903 may read information in the memory 1904 and complete, with reference to hardware of the processor 1903, steps related to data processing in step 301 to step 303 in the foregoing embodiment.

The receiver 1901 may be configured to: receive input digit or character information, and generate a signal input related to related settings and function control of the terminal device. The transmitter 1902 may be configured to output the digital or character information through a first interface. The transmitter 1902 may further be configured to send instructions to a disk group through the first interface, to modify data in the disk group. The transmitter 1902 may further include a display device such as a display.

An embodiment of this application further provides a computer program product. When the computer program product runs on a computer, the computer is enabled to perform the steps of the information recommendation method described in the embodiment corresponding to FIG. 3 in embodiments.

An embodiment of this application further provides a computer-readable storage medium. The computer-readable storage medium stores a program used to perform signal processing. When the program runs on a computer, the computer is enabled to perform the steps of the information recommendation method in the method described in the foregoing embodiments.

The information recommendation apparatus in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the information recommendation apparatus performs the information recommendation method described in the foregoing embodiments, or a chip in the information recommendation apparatus performs the information recommendation method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

In addition, it should be noted that the apparatus embodiments described above are merely an example. The units described as separate parts may or may not be physically separate, and parts displayed as units may or may not be physical units, may be located in one place, or may be distributed on a plurality of network units. Some or all of the modules may be selected based on an actual requirement, to achieve objectives of the solutions in embodiments. In addition, in the accompanying drawings of the apparatus embodiments provided in this application, a connection relationship between modules indicates that the modules have a communication connection with each other, and may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be embodied in a form of a software product. The computer software product is stored in a readable storage medium, such as a floppy disk, a USB flash drive, a removable hard disk, a ROM, a RAM, a magnetic disk, or an optical disc, and includes several instructions for instructing a computer device (which may be a personal computer, a server, or a network device) to execute the methods described in embodiments of this application.

All or some of the foregoing embodiments may be implemented by using software, hardware, firmware, or any combination thereof. When the software is used to implement embodiments, all or a part of embodiments may be implemented in a form of a computer program product.

The computer program product includes one or more computer program instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website site, computer, server or data center to another website site, computer, server or data center in a wired (for example, coaxial cable, optical fiber, digital subscriber line (DSL)) or wireless (for example, infrared, wireless, microwave) manner. The computer-readable storage medium may be any usable medium that can be accessedby a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. An information recommendation method, applied to a vehicle-mounted terminal, wherein the method comprises:
obtaining at least one behavioral intention of a user, wherein the at least one behavioral intention is determined based on historical interaction data between a mobile terminal and the user;
presenting recommendation information based on the at least one behavioral intention, wherein the recommendation information indicates the user to choose from the at least one behavioral intention; and
triggering a target function when it is detected that the user selects a target intention in the at least one behavioral intention based on the recommendation information, wherein the target function is used to implement the target intention.

2. The method according to claim 1, wherein the historical interaction data is interaction data between the mobile terminal and the user that is generated within a preset time period before a current moment; or
the historical interaction data is interaction data between the mobile terminal and the user that is generated within a preset quantity of interaction times before a current moment.

3. The method according to claim 1 or 2, wherein the historical interaction data is a statement entered by the user in a target application that runs on the mobile terminal; or
the historical interaction data is data generated when the user interacts with a target application that runs on the mobile terminal.

4. The method according to any one of claims 1 to 3, wherein semantics of the historical interaction data comprises the at least one behavioral intention of the user.

5. The method according to any one of claims 1 to 4, wherein the presenting recommendation information comprises:
displaying at least one function trigger option, wherein each function trigger option corresponds to one behavioral intention, and each function trigger option is used to trigger a function of implementing a corresponding behavioral intention.

6. The method according to claim 5, wherein the historical interaction data is the statement entered by the user in the target application that runs on the mobile terminal, and the method further comprises:
performing word segmentation processing on the statement, to obtain at least one word segment, wherein each word segment corresponds to one behavioral intention; and
displaying the at least one word segment, and displaying a corresponding function trigger option near a display location of each of the at least one word segment.

7. The method according to any one of claims 1 to 4, wherein the presenting recommendation information comprises:
displaying and/or playing a target statement, wherein the target statement is used to prompt the user whether to enable a function of implementing the at least one behavioral intention.

8. The method according to any one of claims 1 to 7, wherein the at least one behavioral intention comprises a navigation intention or an intention associated with function control within a cockpit.

9. The method according to claim 8, wherein the intention associated with function control within the cockpit comprises at least one of the following:
music playing, video playing, a voice call, a memo content record, an event reminder, air conditioner control, seat adjustment, and sunroof control.

10. The method according to any one of claims 1 to 9, wherein before the obtaining at least one behavioral intention of a user, the method further comprises:
detecting that a communication connection is established with the mobile terminal; or
detecting that a distance from the mobile terminal is less than a threshold; or
detecting that the target application runs, and a same account is logged in to on the mobile terminal and in the target application.

11. The method according to any one of claims 1 to 10, wherein the vehicle-mounted terminal is a control terminal fastened in a vehicle compartment, and the mobile terminal is a removable portable terminal.

12. The method according to any one of claims 1 to 11, wherein the obtaining at least one behavioral intention of a user comprises:
receiving the at least one behavioral intention sent by a server or the mobile terminal; or
receiving the historical interaction data sent by a server or the mobile terminal, and determining the at least one behavioral intention based on the historical interaction data.

13. An information recommendation apparatus, applied to a vehicle-mounted terminal, wherein the apparatus comprises:
an obtaining module, configured to obtain at least one behavioral intention of a user, wherein the at least one behavioral intention is determined based on historical interaction data between a mobile terminal and the user;
a recommendation module, configured to present recommendation information based on the at least one behavioral intention, wherein the recommendation information indicates the user to choose from the at least one behavioral intention; and
a function triggering module, configured to trigger a target function when it is detected that the user selects a target intention in the at least one behavioral intention based on the recommendation information, wherein the target function is used to implement the target intention.

14. The apparatus according to claim 13, wherein the historical interaction data is interaction data between the mobile terminal and the user that is generated within a preset time period before a current moment; or
the historical interaction data is interaction data between the mobile terminal and the user that is generated within a preset quantity of interaction times before a current moment.

15. The apparatus according to claim 13 or 14, wherein the historical interaction data is a statement entered by the user in a target application that runs on the mobile terminal; or
the historical interaction data is data generated when the user interacts with a target application that runs on the mobile terminal.

16. The apparatus according to any one of claims 13 to 15, wherein semantics of the historical interaction data comprises the at least one behavioral intention of the user.

17. The apparatus according to any one of claims 13 to 16, wherein the recommendation module is configured to display at least one function trigger option, wherein each function trigger option corresponds to one behavioral intention, and each function trigger option is used to trigger a function of implementing a corresponding behavioral intention.

18. The apparatus according to claim 17, wherein the historical interaction data is the statement entered by the user in the target application that runs on the mobile terminal, and the apparatus further comprises:
a word segmentation processing module, configured to perform word segmentation processing on the statement, to obtain at least one word segment, wherein each word segment corresponds to one behavioral intention, wherein
the recommendation module is configured to: display the at least one word segment, and display a corresponding function trigger option near a display location of each of the at least one word segment.

19. The apparatus according to any one of claims 13 to 18, wherein the recommendation module is configured to display and/or play a target statement, wherein the target statement is used to prompt the user whether to enable a function of implementing the at least one behavioral intention.

20. The apparatus according to any one of claims 13 to 19, wherein the at least one behavioral intention comprises a navigation intention or an intention associated with function control within a cockpit.

21. The apparatus according to claim 20, wherein the intention associated with function control within the cockpit comprises at least one of the following:
music playing, video playing, a voice call, a memo content record, an event reminder, air conditioner control, seat adjustment, and sunroof control.

22. The apparatus according to any one of claims 13 to 21, wherein the apparatus further comprises a detection module, configured to:
before the at least one behavioral intention of the user is obtained, detect that a communication connection is established with the mobile terminal; or detect that a distance from the mobile terminal is less than a threshold; or run the target application, and log in to an account to which the mobile terminal belongs in the target application.

23. The apparatus according to any one of claims 13 to 22, wherein the vehicle-mounted terminal is a control terminal fastened in a vehicle compartment, and the mobile terminal is a removable portable terminal.

24. The apparatus according to any one of claims 13 to 23, wherein the obtaining module is specifically configured to:
receive the at least one behavioral intention sent by a server or the mobile terminal; or
receive the historical interaction data sent by a server or the mobile terminal, and determine the at least one behavioral intention based on the historical interaction data.

25. A vehicle-mounted terminal, comprising a processor, a memory, and a bus, wherein
the processor is connected to the memory through the bus;
the memory is configured to store a computer program or instructions; and
the processor is configured to invoke or execute the program or instructions stored in the memory, to implement the method according to any one of claims 1 to 12.

26. A computer-readable storage medium, comprising a program, so that when the program runs on a computer, the computer is enabled to perform the method according to any one of claims 1 to 12.

27. A computer program product comprising instructions, wherein when the computer program product runs on a terminal, the terminal is enabled to perform the method according to any one of claims 1 to 12.
